(19) Europäisches Patentamt
European Patent Office
Office européen des brevets

(11) **EP 4 769 991 A1**

## (12) EUROPEAN PATENT APPLICATION
published in accordance with Art. 153(4) EPC

(43) Date of publication:
**01.07.2026 Bulletin 2026/27**

(21) Application number: **23949455.2**

(22) Date of filing: **24.08.2023**

(51) International Patent Classification (IPC):
***H04L 5/00*** (2006.01)

(52) Cooperative Patent Classification (CPC):
**H04L 5/00; H04W 72/0446; H04W 72/23**

(86) International application number:
**PCT/CN2023/114774**

(87) International publication number:
**WO 2025/039270 (27.02.2025 Gazette 2025/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Beijing Xiaomi Mobile Software Co., Ltd.**
**Beijing 100085 (CN)**

(72) Inventor: **TAO, Xuhua**
**Beijing 100085 (CN)**

(74) Representative: **Gunzelmann, Rainer**
**Wuesthoff & Wuesthoff**
**Patentanwälte und Rechtsanwalt PartG mbB**
**Schweigerstraße 2**
**81541 München (DE)**

## (54) COMMUNICATION METHOD, TERMINAL, NETWORK DEVICE, AND STORAGE MEDIUM

(57) The present disclosure relates to a communication method, a terminal, a network device, and a storage medium. The communication method comprises: receiving first information, the first information being used for activating at least two target transmission configuration indicator (TCI) states; receiving a synchronization signal block (SSB) transmitted by a transmission and reception point (TRP) corresponding to each target TCI state, wherein the first SSBs transmitted by the TRPs corresponding to the at least two target TCI states have an overlap in time domain; and on the basis of the received SSBs transmitted by the TRPs corresponding to the target TCI states, determining the switching delay time of the target TCI state s. According to embodiments of the present disclosure, when the first SSBs transmitted by at least two TRPs among mTRPs partially or completely overlap, a terminal can accurately determine the switching delay time of target TCI states.

FIG. 3E

EP 4 769 991 A1

**Description**

TECHNICAL FIELD

The disclosure relates to a field of communication technologies, in particular to a communication method, a terminal, a network device and a storage medium.

BACKGROUND

In legacy media access control control element (MAC CE)-based transmission configuration indicator (TCI) state switch delay requirement, one MAC CE signaling activates only one TCI state, and one TCI state works for one transmission and receiving point (TRP). In a multi-TRP (mTRP) scenario, a terminal may receive signals from more than two TRPs, making the study of time-frequency tracking of signals from more than two TRPs of great significance.

SUMMARY

To address the problem of how to effectively and accurately perform time-frequency tracking for transmission reception point (TRPs) in a multi-TRP (mTRP) scenario, embodiments of the disclosure provide a communication method, a terminal, a network device, and a storage medium.

According to a first aspect, embodiments of the disclosure provide a communication method. The method is performed by a terminal, and includes: receiving first information, in which the first information is configured for activating at least two target transmission configuration indicator (TCI) states; receiving a synchronization signal block (SSB) sent by a TRP corresponding to each of the at least two target TCI states, in which first SSBs sent by TRPs corresponding to the at least two target TCI states are overlapped in a time domain; and determining a target TCI state switch delay based on SSBs sent by the TRPs corresponding to the at least two target TCI states.

According to a second aspect, embodiments of the disclosure provide a communication method. The method is performed by a network device, and includes: sending first information, in which the first information is configured for activating at least two target TCI states; sending a SSB by a TRP corresponding to each of the at least two target TCI states, in which first SSBs sent by TRPs corresponding to the at least two target TCI states are overlapped in a time domain; and determining a target TCI state switch delay based on SSBs sent by the TRPs corresponding to the at least two target TCI states.

According to a third aspect, embodiments of the disclosure provide a terminal. The terminal includes: a first receiving module, configured to receive first information, in which the first information is configured for activating at least two target TCI states; a second receiving module, configured to receive a SSB sent by a TRP corresponding to each of the at least two target TCI states, in which first SSBs sent by TRPs corresponding to the at least two target TCI states are overlapped in a time domain; and a time determining module, configured to determine a target TCI state switch delay based on SSBs sent by the TRPs corresponding to the at least two target TCI states.

According to a fourth aspect, embodiments of the disclosure provide a network device. The network device includes: a first sending module, configured to send first information, in which the first information is configured for activating at least two target TCI states; a second sending module, configured to send a SSB by a TRP corresponding to each of the at least two target TCI states, in which first SSBs sent by TRPs corresponding to the at least two target TCI states are overlapped in a time domain; and a time determining module, configured to determine a target TCI state switch delay based on SSBs sent by the TRPs corresponding to the at least two target TCI states.

According to a fifth aspect, embodiments of the disclosure provide a communication system. The communication system includes a terminal and a network device. The terminal is used for implementing the communication method described in the first aspect, and the network device is used for implementing the communication method described in the second aspect.

According to a sixth aspect, embodiments of the disclosure provide a storage medium. The storage medium has instructions stored thereon, and when the instructions are executed by a communication device, the communication device is caused to implement the communication method described in the first aspect or the communication method described in the second aspect.

BRIEF DESCRIPTION OF THE DRAWINGS

In order to more clearly explain technical solutions of embodiments of the disclosure, the accompanying drawings required for the descriptions of embodiments are introduced below. The following drawings are only some embodiments of the disclosure and do not impose specific limitations on the protection scope of the disclosure.

FIG. 1 is an example schematic diagram of a communication system according to an embodiment of the disclosure.

FIG. 2A is an example interactive schematic diagram of a communication method according to an embodiment of the disclosure.

FIG. 2B is an example interactive schematic diagram of a communication method according to an embodiment of the disclosure.

FIG. 2C is an example interactive schematic diagram of a communication method according to an embodiment of the disclosure.

FIG. 2D is an example interactive schematic diagram of a communication method according to an embodiment of the disclosure.

FIG. 2E is an example schematic diagram of overlapped SSBs in the time domain according to an embodiment of the disclosure.

FIG. 3A is an example flowchart of a communication method according to an embodiment of the disclosure.

FIG. 3B is an example flowchart of a communication method according to an embodiment of the disclosure.

FIG. 3C is an example flowchart of a communication method according to an embodiment of the disclosure.

FIG. 3D is an example flowchart of a communication method according to an embodiment of the disclosure.

FIG. 3E is an example flowchart of a communication method according to an embodiment of the disclosure.

FIG. 4A is an example flowchart of a communication method according to an embodiment of the disclosure.

FIG. 4B is an example flowchart of a communication method according to an embodiment of the disclosure.

FIG. 5A is an example flowchart of a communication method according to an embodiment of the disclosure.

FIG. 6A is a schematic structural diagram of a terminal according to an embodiment of the disclosure.

FIG. 6B is a schematic structural diagram of a network device according to an embodiment of the disclosure.

FIG. 7A is a schematic structural diagram of a communication device according to an embodiment of the disclosure.

FIG. 7B is a schematic structural diagram of a chip according to an embodiment of the disclosure.

DETAILED DESCRIPTION

Embodiments of the disclosure provide a communication method, a terminal, a network device, and a storage medium.

According to a first aspect, embodiments of the disclosure provide a communication method. The method is performed by a terminal, and includes:

receiving first information, in which the first information is configured for activating at least two target transmission configuration indicator (TCI) states;
receiving synchronization signal block(s) (SSB) sent by a respective transmission reception point (TRP) corresponding to each of the at least two target TCI states, in which first ones (also called first SSB) of respective SSBs sent by TRPs corresponding to the at least two target TCI states are overlapped in a time domain; and
determining a target TCI state switch delay based on SSBs sent by the TRPs corresponding to the at least two target TCI states.

In the above embodiments, at least two SSBs are activated based on the first information, and the target TCI state switch delay is determined based on the SSBs. Therefore, the terminal may accurately determine the target TCI state switch delay when the first SSBs sent by at least two TRPs among mTRP are partially or completely overlapped.

In combination with some embodiments of the first aspect, in some embodiments, after determining the target TCI state switch delay based on the SSBs sent by the TRPs corresponding to the at least two target TCI states, the method further includes:

receiving physical downlink control channel (PDCCH) sent by the respective TRP corresponding to each of the at least two target TCI states based on the target TCI state switch delay.

In combination with some embodiments of the first aspect, in some embodiments, determining the target TCI state switch delay based on the SSBs sent by the TRPs corresponding to the at least two target TCI states includes:

determining an SSB receiving capability of the terminal; and
determining the target TCI state switch delay based on the SSB receiving capability and the SSBs sent by the TRPs corresponding to the at least two target TCI states.

In the above embodiments, based on the SSB receiving capability of the terminal, the terminal may accurately determine the TCI state switch delay for different strategies, which makes the target TCI state switch delay more adaptive to the capability of the terminal.

In combination with some embodiments of the first aspect, in some embodiments, the SSB receiving capability includes: single SSB reception, or multi-SSB simultaneous reception.

In combination with some embodiments of the first aspect, in some embodiments, determining the target TCI state switch delay based on the SSBs sent by the TRPs corresponding to the at least two target TCI states includes:

in a case where the single SSB reception is supported by the terminal, determining an arrival time of a target SSB sent by the respective TRP corresponding to each of the at least two target TCI states, in which transmission occasions corresponding to target SSBs of different TRPs are different;
determining a first latest arrival time from arrival times of target SSBs; and
determining the target TCI state switch delay based on the first latest arrival time.

In the above embodiments, in a case where the single SSB reception is supported, when the first SSBs are overlapped, the target TCI state switch delay may be accurately determined by obtaining the arrival times of the target SSBs sent by respective TRPs corresponding to the at least two target TCI states.

In combination with some embodiments of the first aspect, in some embodiments, determining the target TCI state switch delay based on the first latest arrival time includes:

determining a common SSB processing time for TRPs;
determining a sum of the first latest arrival time and the common SSB processing time as a first waiting time for time-frequency tracking; and
determining the target TCI state switch delay based on the first waiting time.

In the above embodiments, in a case where the multi-SSB simultaneous reception is supported, when the first SSBs are overlapped, the target TCI state switch delay may be accurately determined by obtaining the arrival times of the first SSBs sent by respective TRPs corresponding to the at least two target TCI states.

In combination with some embodiments of the first aspect, in some embodiments, in a case where the TRPs corresponding to the at least two target TCI states include a first TRP and a second TRP, the method further includes:

determining a first arrival time of a first SSB sent from the first TRP;
determining a second arrival time of a second SSB sent from the second TRP; and
determining the first latest arrival time from the first arrival time and the second arrival time.

In combination with some embodiments of the first aspect, in some embodiments, determining the target TCI state switch delay based on the SSBs sent by the TRPs corresponding to the at least two target TCI states includes:

in a case where the multi-SSB simultaneous reception is supported by the terminal, determining an arrival time of a first SSB sent from the respective TRP corresponding to each of the at least two target TCI states; and
determining the target TCI state switch delay based on the arrival time of each first SSB.

In combination with some embodiments of the first aspect, in some embodiments, determining the target TCI state switch delay based on the arrival time of each first SSB includes:

determining an SSB processing time of the respective TRP corresponding to each of the at least two target TCI states;

for the respective TRP corresponding to each of the at least two target TCI states, determining a sum of the arrival time of the first SSB of the respective TRP and the SSB processing time of the respective TRP as a second waiting time for time-frequency tracking; and

determining a maximum waiting time in second waiting times of the TRPs corresponding to the at least two target TCI states, and determining the target TCI state switch delay based on the maximum waiting time.

In combination with some embodiments of the first aspect, in some embodiments, determining the target TCI state switch delay based on the arrival time of each first SSB includes:

determining a second latest arrival time in arrival times of first SSBs;

determining a sum of the second latest arrival time and a common SSB processing time for TRPs as a third waiting time for time-frequency tracking; and

determining the target TCI state switch delay based on the third waiting time.

In combination with some embodiments of the first aspect, in some embodiments, the method further includes:

in a case where the single SSB reception is supported by the terminal, processing the SSBs sent by the TRPs corresponding to the at least two target TCI states in sequential; or

in a case where the multi-SSB simultaneous reception is supported by the terminal, processing the SSBs sent by the TRPs corresponding to the at least two target TCI states in parallel.

In combination with some embodiments of the first aspect, in some embodiments, the method further includes:

determining time offsets between the first SSBs sent by the TRPs corresponding to the at least two target TCI states, and determining a maximum time offset from the time offsets;

in a case where the maximum time offset is less than a duration of cyclic prefix (CP), determining an arrival time of the first SSB sent by the respective TRP corresponding to each of the at least two target TCI states, determining a third latest arrival time from arrival times of first SSBs, and determining the target TCI state switch delay based on the arrival times of first SSBs; or

in a case where there is a time offset not less than the duration of CP, determining the target TCI state switch delay based on an SSB receiving capability of the terminal and the SSBs sent by the TRPs corresponding to the at least two target TCI states.

According to a second aspect, embodiments of the disclosure provide a communication method. The method is performed by a network device, and includes:

sending first information, in which the first information is configured for activating at least two target TCI states;

sending SSB(s) by a respective TRP corresponding to each of the at least two target TCI states, in which first SSBs sent by the TRPs corresponding to the at least two target TCI states are overlapped in a time domain; and

determining a target TCI state switch delay based on SSBs sent by the TRPs corresponding to the at least two target TCI states.

In combination with some embodiments of the second aspect, in some embodiments, after determining the target TCI state switch delay based on the SSBs sent by the TRPs corresponding to the at least two target TCI states, the method further includes:

sending PDCCH by the respective TRP corresponding to each of the at least two target TCI states based on the target TCI state switch delay.

In combination with some embodiments of the second aspect, in some embodiments, determining the target TCI state switch delay based on the SSBs sent by the TRPs corresponding to the at least two target TCI states includes:

determining an SSB receiving capability of a terminal; and

determining the target TCI state switch delay based on the SSB receiving capability and the SSBs sent by the TRPs corresponding to the at least two target TCI states.

In combination with some embodiments of the second aspect, in some embodiments, the SSB receiving capability includes: single SSB reception, or multi-SSB simultaneous reception.

In combination with some embodiments of the second aspect, in some embodiments, determining the target TCI state switch delay based on the SSBs sent by the TRPs corresponding to the at least two target TCI states includes:

in a case where the single SSB reception is supported by the terminal, determining an arrival time of a target SSB sent by the respective TRP corresponding to each of the at least two target TCI states, in which transmission occasions corresponding to target SSBs of different TRPs are different;
determining a first latest arrival time in arrival times of target SSBs; and
determining the target TCI state switch delay based on the first latest arrival time.

In combination with some embodiments of the second aspect, in some embodiments, determining the target TCI state switch delay based on the first latest arrival time includes:

determining a common SSB processing time for TRPs;
determining a sum of the first latest arrival time and the common SSB processing time as a first waiting time for time-frequency tracking; and
determining the target TCI state switch delay based on the first waiting time.

In combination with some embodiments of the second aspect, in some embodiments, in a case where the TRPs corresponding to the at least two target TCI states include a first TRP and a second TRP, the method further includes:

determining a first arrival time of a first SSB sent from the first TRP;
determining a second arrival time of a second SSB sent from the second TRP; and
determining the first latest arrival time from the first arrival time and the second arrival time.

In combination with some embodiments of the second aspect, in some embodiments, determining the target TCI state switch delay based on the SSBs sent by the TRPs corresponding to the at least two target TCI states includes:

in a case where the multi-SSB simultaneous reception is supported by the terminal, determining an arrival time of a first SSB sent by the respective TRP corresponding to each of the at least two target TCI states; and
determining the target TCI state switch delay based on the arrival time of each first SSB.

In combination with some embodiments of the second aspect, in some embodiments, determining the target TCI state switch delay based on the arrival time of each first SSB includes:

determining an SSB processing time of the respective TRP corresponding to each of the at least two target TCI states;
for the respective TRP corresponding to each of the at least two target TCI states, determining a sum of the arrival time of the first SSB of the respective TRP and the SSB processing time of the respective TRP as a second waiting time for time-frequency tracking; and
determining a maximum waiting time in second waiting times of the TRPs corresponding to the at least two target TCI states, and determining the target TCI state switch delay based on the maximum waiting time.

In combination with some embodiments of the second aspect, in some embodiments, determining the target TCI state switch delay based on the arrival time of each first SSB includes:

determining a second latest arrival time in arrival times of first SSBs;
determining a sum of the second latest arrival time and a common SSB processing time for TRPs as a third waiting time for time-frequency tracking; and
determining the target TCI state switch delay based on the third waiting time.

In combination with some embodiments of the second aspect, in some embodiments, the method further includes:

determining time offsets between the first SSBs sent by the TRPs corresponding to the at least two target TCI states, and determining a maximum time offset from the time offsets;
in a case where the maximum time offset is less than a duration of cyclic prefix (CP), determining an arrival time of the first SSB sent by the respective TRP corresponding to each of the at least two target TCI states, determining a third latest arrival time from arrival times of first SSBs, and determining the target TCI state switch delay based on the arrival times of first SSBs; or
in a case where there is a time offset not less than the duration of CP, determining the target TCI state switch delay based on an SSB receiving capability of the terminal and the SSBs sent by the TRPs corresponding to the at least two target TCI states.

According to a third aspect, embodiments of the disclosure provide a terminal. The terminal includes:

a first receiving module, configured to receive first information, in which the first information is configured for activating at least two target TCI states;
a second receiving module, configured to receive SSB(s) sent by a respective TRP corresponding to each of the at least two target TCI states, in which first SSBs sent by TRPs corresponding to the at least two target TCI states are overlapped in a time domain; and
a time determining module, configured to determine a target TCI state switch delay based on SSBs sent by the TRPs corresponding to the at least two target TCI states.

According to a fourth aspect, embodiments of the disclosure provide a network device. The network device includes:

a first sending module, configured to send first information, in which the first information is configured for activating at least two target TCI states;
a second sending module, configured to send SSB(s) by a respective TRP corresponding to each of the at least two target TCI states, in which first SSBs sent by TRPs corresponding to the at least two target TCI states are overlapped in a time domain; and
a time determining module, configured to determine a target TCI state switch delay based on SSBs sent by the TRPs corresponding to the at least two target TCI states.

According to a fifth aspect, embodiments of the disclosure provide a communication system. The communication system includes a terminal and a network device. The terminal is configured to implement the method described in optional implementations of the first aspect, and the network device is configured to implement the method described in optional implementations of the second aspect.

According to a sixth aspect, embodiments of the disclosure provide a storage medium. The storage medium has instructions stored thereon, and when the instructions are executed by a communication device, the communication device is caused to implement the method described in optional implementations of the first aspect and the method described in optional implementations of the second aspect.

According to a seventh aspect, embodiments of the disclosure provide a program product. When the program product is executed by a communication device, the communication device is caused to implement the method described in optional implementations of the first aspect and the method described in optional implementations of the second aspect.

According to an eighth aspect, embodiments of the disclosure provide a computer program. When the computer program is executed by a computer, the computer is caused to implement the method described in optional implementations of the first aspect and the method described in optional implementations of the second aspect.

According to a ninth aspect, embodiments of the disclosure provide a chip/chip system. The chip/chip system includes a processing circuit, and is configured to implement the method described in optional implementations of the first aspect and the method described in optional implementations of the second aspect.

It is understood that the terminal, the network device, the communication system, the storage medium, the program product, the computer program and the chip/chip system are all used for implementing the methods according to embodiments of the disclosure. For the beneficial effects they achieve, reference may be made to the beneficial effects in the corresponding methods, which will not be repeated here.

Embodiments of the disclosure provide a communication method, a terminal, a network device and a storage medium. In some embodiments, terms "information processing method" and "communication method" are interchangeable.

Not all of embodiments of the disclosure are provided in the disclosure, only some embodiments are illustrated below and they are not taken as specific limitations on the protection scope of the disclosure. Without contradiction, in an embodiment, each step may be implemented as an independent embodiment, and steps may be combined arbitrarily. For example, any solution after removing some steps in an embodiment may also be implemented as an independent embodiment. The steps in an embodiment may be performed in different orders, and optional implementations of embodiment may be combined arbitrarily. In addition, embodiments of the disclosure may also be combined arbitrarily. For example, some or all of steps of different embodiments may be combined arbitrarily, and each embodiment may be arbitrarily combined with optional implementations of other embodiments.

In embodiments of the disclosure, unless there are special explanations and logical conflicts, terms and/or descriptions of embodiments are consistent and may refer to each other, and technical features in different embodiments may be combined as a new embodiment according to their inherent logical relations.

Terms used in embodiments of the disclosure are only for the purpose of describing specific embodiments and are not considered as limitations of the disclosure.

In embodiments of the disclosure, unless otherwise specified, an element expressed in a singular form through "a", "an" "the" "the above", "said", "the above described" or "this", is interpreted as that there is "one and only one", "one or more" or "at least one" of the element. For example, when an article, e.g., "a", "an" or "the" in English, is used in translation, a noun after the article can be interpreted in a singular form or in a plural form.

In embodiments of the disclosure, "a plurality of" refers to "two or more".

In some embodiments, terms "at least one of", "one or more", "a plurality of" and "multiple" are interchangeable.

In some embodiments, descriptions such as "at least one of A or B", "A and/or B", "in one case A, while in another case B", and "in response to one case A, while in response to another case B" may be used in the following technical solutions depending on the specific conditions: in some embodiments, A is executed independent of B; in some embodiments, B is executed independent of A; in some embodiments, A and B are selectively executed; and in some embodiments, A and B are both executed. The same applies when there are more branches such as A, B and C.

In some embodiments, "A or B" may be used in following technical solutions depending on the conditions: in some embodiments, A is executed independent of B; in some embodiments, B is executed independent of A; and in some embodiments, A and B are selectively executed. The same applies when there are more branches such as A, B and C.

The prefixes such as "first" and "second" in embodiments of the disclosure are used only for distinguishing different objects. The prefix is not intended to limit the position, order, priority, quantity or content of a certain object. The description of the object can refer to related contexts in the descriptions of claims and embodiments, and should not constitute unnecessary limitations because of the use of prefix. For example, when describing a "field", the prefixes "first" and "second" in "first field" and "second field" do not indicate the positions or orders of the two fields or whether the "first field" and "second field" are in the same message or not, nor do they define the sequence of the "first field" and "second field". For another example, when describing a "level", the prefixes "first" and "second" in "first level" and "second level" do not limit the priorities of the levels. Moreover, an ordinal number used to describe an object does not limit a quantity of the object, and it is possible that there are one or more of such object. Taking "first device" as an example, there may be one or more "first devices". In addition, objects with different prefixes may refer to the same object or different objects. For example, when describing a "device", "first device" and "second device" may refer to the same device or different devices, or may refer to the same device type or different device types. When describing "information", "first information" and "second information" may refer to the same information or different information, or may refer to the same content or different contents.

In some embodiments, "comprising A", "containing A", "used to indicate A" and "carrying A" may be interpreted as "directly carrying A" or "indirectly indicating A".

In some embodiments, terms "in response to", "in response to determining", "in the case of", "when", "while", "if" and "assuming that" are interchangeable.

In some embodiments, terms "greater than", "greater than or equal to", "more than" "more than or equal to", "higher than", "higher than or equal to", "no less than", "no lower than" and "above" are interchangeable. Moreover, terms "less than", "less than or equal to", "lower than", "lower than or equal to", "smaller than", "smaller than or equal to", "no greater than", "no higher than" and "below" are interchangeable.

In some embodiments, the device/apparatus may be interpreted as physical or virtual, and its name is not limited to those listed in embodiments. It may also be referred to as "equipment", "device", "circuit", "network element", "node", "function", "unit", "section", "system", "network", "chip", "chip system", "entity" and "subject" when appropriate.

In some embodiments, "network" may be interpreted as a device included in the network, such as an access network device and a core network device.

In some embodiments, "access network (AN) device" may also be referred to as "radio access network (RAN) device", "base station (BS)", "radio BS" or "fixed station". In some embodiments, it may also be understood as "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier" or "bandwidth part (BWP)".

In some embodiments, "terminal" or "terminal device" may also be referred to as "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client" or "client".

In some embodiments, data and information are obtained by means comply with the laws and regulations of the host country.

In some embodiments, data and information are obtained with the consent of users.

In addition, each element, row or column in the tables of embodiments of the disclosure may be implemented as an independent embodiment, or any combination of elements, rows and columns may be implemented as an independent embodiment.

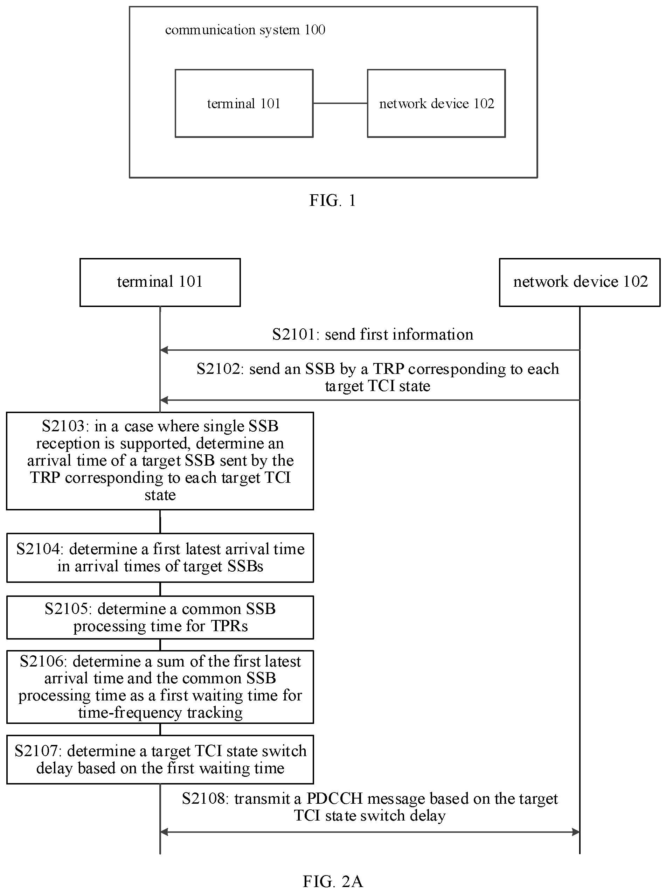

FIG. 1 is a schematic structural diagram of a communication system illustrated according to an embodiment of the disclosure.

As illustrated in FIG. 1, the communication system 100 includes a terminal 101 and a (core) network device 102.

In some embodiments, the terminal 101 includes at least one of a mobile phone, a wearable device, an Internet of Things (IoT) device, a car with communication functions, a smart car, a Pad, a computer with wireless transceiver functions, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city or a wireless terminal in smart home, which is not limited herein.

In some embodiments, the network device 102 includes at least one of an AN device or a core network device.

In some embodiments, the AN device 102 may be a node or a device that connects the terminal to a wireless network. The AN device includes at least one of an evolved Node B (eNB) in a 5th generation (5G) mobile communication system, a next generation eNB (ng-eNB), a next generation NodeB (gNB), a node B (NB), a home NB (HNB), a home eNB (HeNB), a wireless backhaul equipment, a radio network controller (RNC), a BS controller (BSC), a base transceiver station (BTS), a base band unit (BBU), a mobile switching center, a BS in a 6th generation (6G) mobile communication system, an Open RAN, a Cloud RAN, a BS in other communication systems, or an access node in a wireless fidelity (Wi-Fi) system, which is not limited here.

In some embodiments, the technical solution of the disclosure is applied to the Open RAN. In this case, interfaces between AN devices or interfaces within an AN device involved in embodiments of the disclosure may be used as internal interfaces of the Open RAN. The procedures and information interactions between these internal interfaces are implemented by software or programs.

In some embodiments, the AN device is composed of a central unit (CU) and distributed units (DUs), and "CU" may also be the abbreviation of control unit. The use of CU-DU structure allows to divide a protocol layer of the AN device, such that some functions of the protocol layer are placed in the CU for centralized control, and some or all of the remaining functions of the protocol layer are distributed in the DUs that are centrally controlled by the CU, which is not limited here.

In some embodiments, the core network device may be a device, including one or more network elements, or a plurality of devices or groups of devices, each including some or all of the one or more network elements. The network element may be virtual or physical. The core network includes at least one of an evolved packet core (EPC), a 5G core network (CN) or a next generation core (NGC).

It is understandable that to clearly illustrate the technical solution of embodiments of the disclosure, its applicable communication system is introduced first in embodiments of the disclosure, which does not constitute as a limitation on the technical solution according to embodiments of the disclosure. Those skilled in the art understand that as system architectures evolve and new business scenarios emerge, the technical solution according to embodiments of the disclosure is also applicable to similar technical problems.

The following embodiments of the disclosure are applied to the entire or a portion of the communication system 100 shown in FIG. 1, which is not limited herein. The entities shown in FIG. 1 are examples. The communication system may include all or part of the entities in FIG. 1, and may also include entities not shown in FIG. 1. The quantity and form of each entity are arbitrary, and these entities can be physical or virtual. The connection relationships between these entities are illustrated as examples. For example, the entities may or may not be connected, and the entities may be connected by any means, e.g., directly or indirectly, or in a wired manner or wirelessly.

Embodiments of the disclosure may be applied to long-term evolution (LTE), LTE-Advanced (LTE-A), LTE-Beyond (LTE-B), SUPER 3G, IMT-Advanced, 4th generation (4G) mobile communication system, 5G, 5G new radio (NR), future radio access (FRA), new-radio access technology (RAT), NR, new radio access (NX), future generation radio access (FX), global system for mobile communications (GSM®), CDMA2000, ultra mobile broadband (UMB), IEEE 802.11(Wi-Fi®), IEEE 802.16 (WiMAX®), IEEE 802.20, ultra-wideband (UWB), Bluetooth®, public land mobile network (PLMN), Device-to-Device (D2D) system, machine-to-machine (M2M) system, IoT system, Vehicle-to-Everything (V2X) system, systems using other communication methods or their next generation systems. In addition, the above systems may be combined for applications, such as a combination of LTE/LTE-A and 5G.

In legacy MAC CE-based TCI state switch delay requirement, only one TCI state is activated in one MAC CE, and time-frequency tracking is based on an SSB sent by a TRP corresponding to each TCI state.

In an mTRP scenario, a terminal may receive signals from more than two TRPs. There are two modes, i.e., single downlink control information (sDCI) and multi DCI (mDCI). For simultaneous reception in the mDCI mode, one MAC CE will activate more than one codepoint. In each codepoint, there are two TCI states. One TCI state works for one TRP. Therefore, one MAC CE will activate at least two TCI states in one command. Thus, time-frequency tracking for single SSB cannot be reused anymore, and it is necessary to perform time-frequency tracking for SSBs corresponding to at least two TCI states. Therefore, in the mTRT scenario, time-frequency tracking for TCI state switching is a problem to be solved urgently.

FIG. 2A is an example interactive schematic diagram of a communication method according to an embodiment of the disclosure. As illustrated in FIG. 2A, embodiments of the disclosure relates to a communication method, and includes the following.

At step S2101, the network device sends first information to the terminal.

In some embodiments, the network device may be an AN device or a CU in the AN device.

In some embodiments, the network device sends the first information to the terminal through one TRP of multiple TRPs. For example, in some embodiments, the terminal 101 receives the first information sent by the network device 102.

In some embodiments, terms "transmission reception point", "Transmit-Receive Point" and "TRP" are interchangeable.

In some implementations, the first information is configured for activating at least two target TCI states.

In some implementations, the first information is used for indicating at least two target TCI states.

In some implementations, the first information is used for configuring at least two target TCI states.

In some implementations, the terminal receives the first information sent by the network device and determines at least two target TCI states to be activated.

In some implementations, the first information may be a MAC CE signaling, which is configured for activating at least two target TCI states. In some implementations, the name of the first information is not limited. For example, it may also be referred to as "TCI state activation information". For example, in some implementations, the first information includes, but is not limited to, "downlink control information", "DCI", "media access control layer control element command", "MAC CE" and "MAC CE command".

In some embodiments, the first information includes a field for indicating target TCI states to be activated, and the field may indicate indexes of these target TCI states.

In some embodiments, the first information includes a bitmap of TCI states. The target TCI states are determined based on values at different positions on the bitmap. That is, different TCI states correspond to different positions. For example, in a case where the value at a certain position is 1, it is determined that a TCI state corresponding to this position is activated, i.e., a target TCI state.

In some embodiments, terms "transmission configuration indicator", "transmission configuration indication" and "TCI" are interchangeable.

At step S2102, the terminal receives SSB(s) sent by a respective TRP corresponding to each of the at least two target TCI states.

In some implementations, information transmission between the network device and the terminal is implemented through a plurality of TRPs. Each TCI state corresponds to a respective TRP, and TRPs corresponding to different TCI states are different.

In some implementations, the network device sends the SSBs to the terminal through the TRPs corresponding to the target TCI states, respectively. That is, the TRP corresponding to each target TCI state sends corresponding SSB(s) to the terminal. For example, in a case where two target TCI states are included, i.e., one target TCI state corresponds to a first TRP (TRP#1) and the other target TCI state corresponds to a second TRP (TRP#2), TRP#1 may send SSB(s) to the terminal, and TRP#2 sends SSB(s) to the terminal. For example, the terminal may receive the SSB(s) sent by the respective TRP corresponding to each target TCI state. That is, the terminal may receive the SSBs sent by TRP#1 and TRP#2, respectively.

Terms "SSB", "synchronization signal and PBCH block" and "synchronization signal block" are interchangeable.

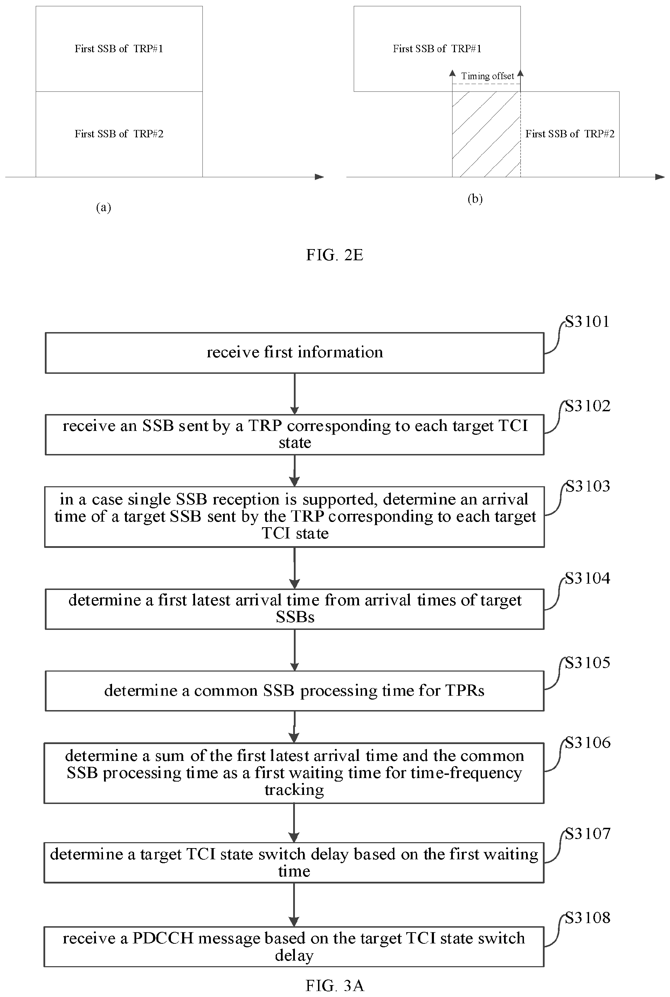

In some implementations, first SSBs respectively sent by TRPs corresponding to the at least two target TCI states are overlapped in the time domain. For example, the SSBs are partially or completely overlapped in the time domain. As illustrated in FIG. 2E, the SSBs are completely overlapped as illustrated in (a), and the SSBs are partially overlapped as illustrated in (b).

For example, there is a time offset between first SSBs sent respectively by two TRPs corresponding to two target TCI states. In some embodiments, the name of the time offset is not limited. For example, it may also be referred to as "timing offset".

In some embodiments, the time offset is used for indicating an overlapped part between the first SSBs sent respectively by every two TRPs. That is, for two first SSBs, the time offset is a time interval between a time when the reception of a former first SSB is completed by the terminal and a time when the reception of a latter first SSB is completed by the terminal 101. FIG. 2E is a schematic diagram of a time offset according to an embodiment of the disclosure. As illustrated in FIG. 2E, "First SSB of TRP#1" represents the first one of SSBs (i.e., the first SSB) sent by TRP#1, "First SSB of TRP#2" represents the first one of SSBs (i.e., the first SSB) sent by TRP#2, and "timing offset" between the two dotted lines in the figure represents the time offset between the first SSB from TRP#1 and the first SSB from TRP#2.

At step S2103, in a case where the terminal supports the single SSB reception, the terminal determines an arrival time of a target SSB sent by the respective TRP corresponding to each of the at least two target TCI states.

In some implementations, the receiving capability of the terminal for SSBs is determined. For example, the receiving capability of the terminal for SSBs includes, but is not limited to, single SSB reception or multi-SSB simultaneous reception.

In some implementations, in a case where the terminal supports the single SSB reception, the terminal can only receive an SSB sent by one TRP at each time. That is, in a case where the first SSBs sent respectively by the TRPs corresponding to two target TRP states are overlapped in the time domain, the terminal can only drop the SSB arrived later in the overlapped area since the terminal supports only the single SSB reception.

In some implementations, supporting the single SSB reception by the terminal means that the terminal can only receive one SSB in each slot and needs to wait for the next slot to receive another SSB.

In some embodiments, the target SSBs sent from different TRPs may rank in different orders in respective SSB sequences transmitted from the TRPs. For example, the target SSB of an $i^{th}$ TRP is a $k^{th}$ SSB in the SSB sequence transmitted from the $i^{th}$ TRP, where i is a natural number less than n, n represents the number of TRPs connected to the terminal, and k is a natural number. That is, for example, if a sequence of first SSBs transmitted from TRP#1 to TRP#n is 1 to n, then the target SSB of the $i^{th}$ TRP is the $i^{th}$ SSB in the SSB sequence transmission from the $i^{th}$ TRP. As illustrated in FIG. 2E, the target SSB of TRP#1 is the first SSB in the SSB sequence transmitted from the TRP#1, and the target SSB of TRP#2 is the second SSB in the SSB sequence transmitted from the TRP#2. If there are three TRPs and the sequence of first SSBs transmitted from TRP#1 to TRP#3 may be that the first SSB transmitted from the TRP#1 is ranked in the first position, the first SSB transmitted from the TRP#2 is ranked in the third position, and the first SSB transmitted from the TRP#3 is ranked in the second position, then the target SSB of the TRP#1 is the first SSB in the SSB sequence transmitted from the TRP#1, the target SSB of the TRP#2 is the third SSB in the SSB sequence transmitted from the TRP#2, and the target SSB of the TRP#3 is the second SSB in the SSB sequence transmitted from the TRP#3.

In some embodiments, the arrival time of a target SSB is a time when the target SSB sent by a TRP arrives at the terminal, which is understood as a time when the terminal receives the target SSB.

In some implementations, in a case where the terminal supports the single SSB reception, the SSBs sent by the TRPs corresponding to the at least two target TCI states are processed in sequential.

At step S2104, a first latest arrival time is determined from arrival times of target SSBs.

In some implementations, the terminal determines the first latest arrival time from the arrival time of each target SSB in the case where the terminal supports the single SSB reception. It is understood that the first latest arrival time is a maximum arrival time among the arrival times of the target SSBs.

At step S2105, a common SSB processing time for TRPs is determined.

In some implementations, in a case where the terminal supports the single SSB reception, the common SSB processing time for TRPs is a processing time suitable for the SSB(s) sent by each TRP. For example, the common SSB processing time may be a maximum processing time among all the processing times taken for processing the SSBs sent by different TRPs. That is, the processing time of each SSB sent by each TRP is determined firstly, and then the maximum processing time is determined among the processing times as the common SSB processing time.

In some implementations, the common SSB processing time may be 2ms.

At step S2106, a sum of the first latest arrival time and the common SSB processing time is determined as a first waiting time for time-frequency tracking.

In some implementations, in a case where the terminal supports the single SSB reception, the sum of the first latest arrival time during the single SSB reception and the common SSB processing time is obtained and determined as the first waiting time for time-frequency tracking.

At step S2107, a target TCI state switch delay is determined based on the first waiting time.

In some implementations, the switch delay refers to a duration between a time when the first information is received and a time when PDCCH is received. That is, the switch delay may ensure that the terminal may correctly receive and decode PDCCH information.

In some implementations, based on the first waiting time, the target TCI state switch delay is calculated by the following equation:

$$T_{S1} = n + T_{HARQ} + 3N_{slot}^{subframe,\mu} + TO_k * max((T_{\text{first-SSB-TPR1}} +$$

$$T_{\text{SSB-proc}}), (T_{2nd-SSB-TRP2} + T_{\text{SSB-proc}})) \,/\, NR \; slot \; length \qquad (2\text{-}1);$$

or

$$T_{S1} = n + T_{HARQ} + 3N_{slot}^{subframe,\mu} + TO_k * \left( max \left(T_{\text{first-SSB-TPR1}}, TT_{2nd-SSB-TRP2}\right) \right.$$

$$\left. + T_{\text{SSB-proc}}\right) / NR \ slot \ length \tag{2-2}$$

where $T_{S1}$ represents the target TCI state switch delay; n represents a slot; $T_{HARQ}$ represents a timing between the downlink data transmission and acknowledgement; $N_{slot}^{subframe,\mu}$ represents a decoding period; $T_{\text{first-SSB-TRP1}}$ represents an arrival time of a first SSB from TRP1; $T_{2nd\text{-}SSB\text{-}TRP2}$ represents an arrival time of a second SSB from TRP2; $T_{\text{SSB-proc}}$ represents the common SSB processing time; $NR \ slot \ length$ represents a slot length; and in a case where the target TCI state is not in an active TCI state list for physical downlink shared channel (PDSCH), $TO_k=1$, otherwise, $TO_k=0$.

$max$ ($T_{\text{first-SSB-TPR1}}$, $T_{2nd\text{-}SSB\text{-}TRP2}$) is used to determine the first latest arrival time;

$$max \left( \left(T_{\text{first-SSB-TPR1}} + T_{\text{SSB-proc}} \right), \left(T_{2nd-SSB-TRP2} + T_{\text{SSB-proc}}\right)\right),$$

or

$max$($T_{\text{first-SSB-TPR1}}$, $T_{2nd\text{-}SSB\text{-}TRP2}$)$+T_{\text{SSB-proc}}$) represents the first waiting time for time-frequency tracking.

It is understood that $T_{2nd\text{-}SSB\text{-}TRP2}$ is always later than $T_{\text{first-SSB-TPR1}}$. The above equation for calculating the target TCI state switch delay may be rewritten as:

$$T_{S1} = n + T_{HARQ} + 3N_{slot}^{subframe,\mu} + TO_k * \left(T_{2nd-SSB-TRP2} + T_{\text{SSB-proc}}\right) / NR \ slot \ length \tag{2-3}$$

At step S2108, the network device and the terminal transmit a PDCCH message based on the target TCI state switch delay.

In some implementations, after determining the target TCI state switch delay, the network device sends the PDCCH determined by the target TCI states to the terminal based on the target TCI state switch delay. The terminal receives the PDCCH message determined by the target TRP states sent by the network device through the TRPs corresponding to the target TCI states.

In some implementations, the PDCCH message is used for carrying scheduling information and other control information, such as transmission format, resource allocation and power control.

The communication method according to embodiments of the disclosure includes at least one of steps S2101-S2108. For example, step S2101 may be implemented as an independent embodiment, step S2102 may be implemented as an independent embodiment, step S2103 may be implemented as an independent embodiment, and steps S2101 and S2102 may be implemented as an independent embodiment, which is not limited here.

Without contradiction, in an implementation/embodiment, each step may be executed independently, and steps may be arbitrarily combined or executed in different orders. Its options or optional examples may be arbitrarily combined, and may also be arbitrarily combined with any step of other implementations/embodiments.

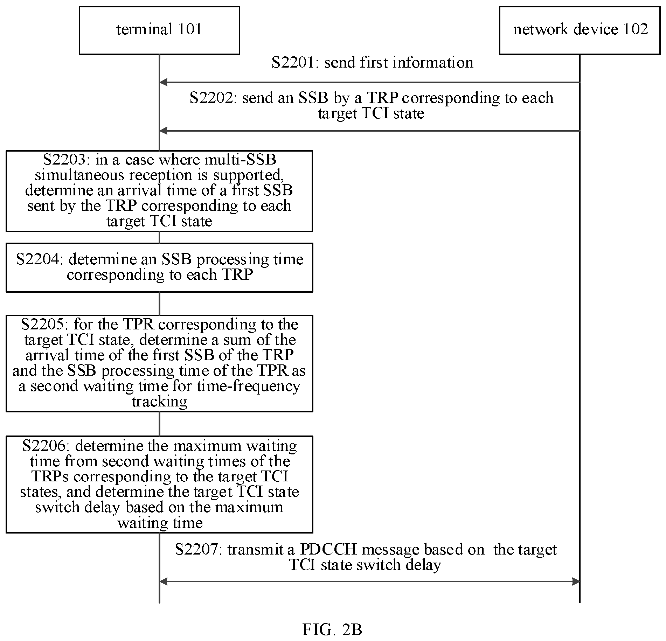

FIG. 2B is an interactive schematic diagram of a communication method illustrated according to an embodiment of the disclosure. As illustrated in FIG. 2B, embodiments of the disclosure relate to a communication method, and includes the following.

At step S2201, the network device sends first information to the terminal.

At step S2202, the terminal receives SSB(s) sent by a respective TRP corresponding to each target TCI state.

For optional implementations of steps S2201 and S2202, reference may be made to steps S2101 and S2102 in FIG. 2A, and to other related parts in embodiments of FIG. 2A, which is not repeated herein.

At step S2203, in a case where the terminal supports the multi-SSB simultaneous reception, the terminal determines an arrival time of a first SSB sent by the respective TRP corresponding to each target TCI state.

In some implementations, in a case where the terminal supports the multi-SSB simultaneous reception, the arrival times of the first SSBs sent respectively by the TRPs corresponding to the at least two target TCI states are determined. The arrival time of the first SSB is the time when the first SSB is received by the terminal.

In some implementations, in a case where the terminal supports the multi-SSB simultaneous reception, the first SSB sent by each TRP is a target SSB.

In some implementations, in a case where the terminal supports the multi-SSB simultaneous reception, that is, even if the respective SSBs sent by the TRPs corresponding to the target TCI states are overlapped in the time domain, the terminal is still able to receive the first SSBs sent respectively by the TRPs corresponding to the target TCI states, without dropping SSBs sent later.

In some implementations, in a case where the terminal supports the multi-SSB simultaneous reception, that is, the terminal is able to receive at least two SSBs simultaneously in each slot and process the at least two SSBs in parallel.

In some implementations, in a case where the terminal supports the multi-SSB simultaneous reception, SSBs sent by TRPs corresponding to at least two target TCI states are processed in parallel.

At step S2204, an SSB processing time of the respective TRP corresponding to each target TCI state is determined.

In some implementations, the SSB processing times for the TRPs corresponding to different target TCI states may be different or the same.

At step S2205, for a respective TRP corresponding to each target TCI state, a sum of the arrival time of the first SSB of the respective TRP and the SSB processing time of the respective TRP is determined as a second waiting time for time-frequency tracking.

At step S2206, a maximum waiting time is determined from the second waiting times of the TRPs corresponding to the target TCI states, and the target TCI state switch delay is determined based on the maximum waiting time.

In some implementations, the respective second waiting time corresponding to each target TCI state is determined. For example, the maximum waiting time is determined among all the second waiting times.

In some implementations, the target TCI state switch delay is determined based on the maximum waiting time. For example, in a case where TRP1 and TRP2 exist, the target TCI state switch delay is calculated by the following equation:

$$T_{S2} = n + T_{HARQ} + 3N_{slot}^{subframe,\mu} + TO_k * max((T_{\text{first}-\text{SSB}-\text{TPR1}} +$$

$$T_{\text{SSB}-\text{proc}-\text{TPR1}}), (T_{first-SSB-TRP2} + T_{\text{SSB}-\text{proc}-\text{TPR2}})) / NR\ slot\ length \qquad (2\text{-}4)$$

where TS2 represents the target TCI state switch delay; $T_{\text{first-SSB-TPR1}}$ represents an arrival time of the first SSB from TRP1; $T_{\text{SSB-proc-TPR1}}$ represents an SSB processing time of TRP1; $T_{\text{first-SSB-TPR1}}$ + $T_{\text{SSB-proc-TPR1}}$ represents a second waiting time for time-frequency tracking of TRP1; $T_{\text{first-SSB-TRP2}}$ represents an arrival time of the first SSB from TRP2; $T_{\text{SSB-proc-TPR2}}$ represents an SSB processing time of TRP2; and $T_{\text{first-SSB-TRP2}}$ + $T_{\text{SSB-proc-TPR2}}$ represents a second waiting time for time-frequency tracking of TRP2.

At step S2207, the network device and the terminal transmit a PDCCH message based on the target TCI state switch delay.

For optional implementations of step S2207, reference may be made to step S2108 of FIG. 2A and to other related parts of embodiments of FIG. 2A, which is not repeated here.

The communication method according to embodiments of the disclosure includes at least one of steps S2201-S2207. For example, step S2201 may be implemented as an independent embodiment, step S2202 may be implemented as an independent embodiment, step S2203 may be implemented as an independent embodiment, and steps S2201 and S2202 may be implemented as an independent embodiment, which is not limited here.

Without contradiction, in an implementation/embodiment, each step may be executed independently, and steps may be arbitrarily combined or executed in different orders. Its options or optional examples may be arbitrarily combined, and may also be arbitrarily combined with any step of other implementations/embodiments.

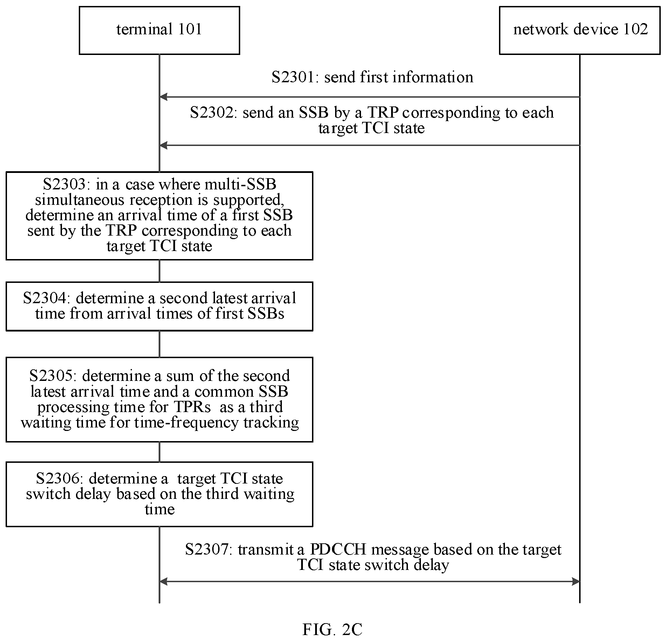

FIG. 2C is an interactive schematic diagram of a communication method illustrated according to an embodiment of the disclosure. As illustrated in FIG. 2C, embodiments of the disclosure relate to a communication method, and includes the following.

At step S230 1, the network device sends first information to the terminal.

At step S2302, the terminal receives SSB(s) sent by a respective TRP corresponding to each target TCI state.

For optional implementations of steps S2301 and S2302, reference may be made to steps S2101 and S2102 in FIG. 2A, and to other related parts in embodiments of FIG. 2A, which is not repeated herein.

At step S2303, in a case where the terminal supports the multi-SSB simultaneous reception, the terminal determines arrival times of first SSBs sent by TRPs corresponding to the at least two target TCI states respectively.

For optional implementations of step S2303, reference may be made to steps S2203 in FIG. 2B, and to other related parts in embodiments of FIG. 2B, which is not repeated herein.

At step S2304, a second latest arrival time is determined from the arrival times of the first SSBs.

In some implementations, a maximum arrival time is determined from all the arrival times of the first SSBs, which is the second latest arrival time.

At step S2305, a sum of the second latest arrival time and a common SSB processing time for TRPs is determined as a third waiting time for time-frequency tracking.

At step S2306, the target TCI state switch delay is determined based on the third waiting time.

In some implementations, the target TCI state switch delay is calculated based on the third waiting time by the following equation:

$$T_{S3} = n + T_{HARQ} + 3N_{slot}^{subframe,\mu} + TO_k * (max(T_{\text{first}-SSB-TPR1}, T_{first-SSB-TRP2}) +$$

$$T_{\text{SSB}-\text{proc}}) / NR\ slot\ length \qquad\qquad (2\text{-}5)$$

where TS3 represents the target TCI state switch delay; $max(T_{\text{first-SSB-TPR1}}, T_{first\text{-}SSB\text{-}TRP2})$ represents the second latest arrival time; and $max(T_{\text{first-SSB-TPR1}}, T_{\text{first-SSB-TRP2}}) + T_{\text{SSB-proc}}$ represents the third waiting time for time-frequency tracking.

At step S2307, the network device and the terminal transmit a PDCCH message based on the target TCI state switch delay.

For optional implementations of step S2307, reference may be made to step S2108 of FIG. 2A and to other related parts of embodiments of FIG. 2A, which is not repeated here.

The communication method according to embodiments of the disclosure includes at least one of steps S2301-S2307. For example, step S2301 may be implemented as an independent embodiment, step S2302 may be implemented as an independent embodiment, step S2303 may be implemented as an independent embodiment, and steps S2301 and S2302 may be implemented as an independent embodiment, which is not limited here.

Without contradiction, in an implementation/embodiment, each step may be executed independently, and steps may be arbitrarily combined or executed in different orders. Its options or optional examples may be arbitrarily combined, and may also be arbitrarily combined with any step of other implementations/embodiments.

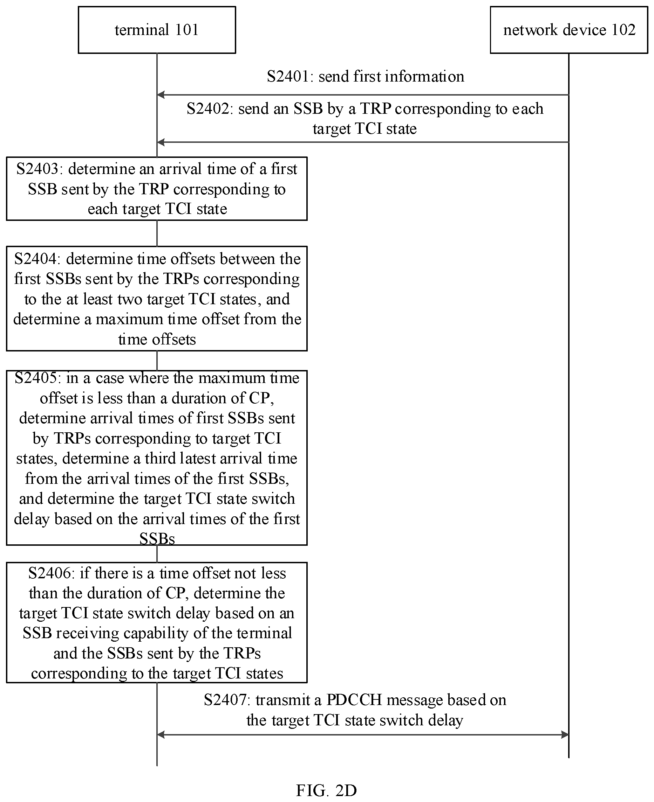

FIG. 2D is an interactive schematic diagram of a communication method illustrated according to an embodiment of the disclosure. As illustrated in FIG. 2D, embodiments of the disclosure relate to a communication method, and includes the following.

At step S2401, the network device sends first information to the terminal.

At step S2402, the terminal receives SSB(s) sent by a respective TRP corresponding to each target TCI state.

For optional implementations of steps S2401 and S2402, reference may be made to steps S2101 and S2102 in FIG. 2A, and to other related parts in embodiments of FIG. 2A, which is not repeated herein.

At step S2403, the terminal determines arrival times of first SSBs sent by TRPs corresponding to the at least two target TCI states.

In some implementations, SSB receiving capability of the terminal may be the single SSB reception or the multi-SSB simultaneous reception.

In a case where the terminal supports the single SSB reception, for the optional implementations of step S2403, reference may be made to step S2103 in FIG. 2A and to other related parts in embodiments of FIG. 2A, which is not repeated here.

In a case where the terminal supports the multi-SSB simultaneous reception, for the optional implementations of step S2403, reference may be made to step S2203 in FIG. 2B and to other related parts in embodiments of FIG. 2B, which is not repeated here.

At step S2404, time offsets between the first SSBs sent by the TRPs corresponding to the at least two target TCI states are determined, and a maximum time offset is determined from all the time offsets.

In some implementations, the time offsets between the first SSBs sent by the TRPs corresponding to the at least two target TCI states are determined, and the maximum time offset is determined from all the time offsets.

At step S2405, in a case where the maximum time offset is less than a duration of CP, the arrival time of the first SSB sent by the respective TRP corresponding to each target TCI state is determined, a third latest arrival time is determined from the arrival time of each first SSB, and the target TCI state switch delay is determined based on the arrival time of each first SSB.

In some embodiments, terms "CP" and "cyclic prefix" are interchangeable.

In some embodiments, in a case where the time offsets between first SSBs sent by at least two TRPs are all less than the duration of CP, it is considered that the first SSBs sent by the at least two TRPs are slightly overlapped, which will not affect the reliability of transmission of effective information in SSBs. In this case, the first one of SSBs from each TRP is determined as a target SSB. For optional implementations of step S2405, reference may be made to step S2206 of FIG. 2B, to step S2306 in FIG. 2C, and to other related parts of embodiments of FIG. 2B and FIG. 2C, which is not repeated here.

At step S2406, if there is a time offset not less than the duration of CP, the target TCI state switch delay is determined based on an SSB receiving capability of the terminal and the SSBs sent by the TRPs corresponding to the target TCI states.

In some embodiments, if there is a time offset not less than the duration of CP, it is considered that the first SSBs sent by the at least two TRPs are largely overlapped, which may affect the reliability of transmission of effective information in SSBs. In this case, the target TCI state switch delay is determined based on the SSB receiving capability of the terminal and the SSBs sent by the TRPs corresponding to the target TCI states.

For optional implementations of step S2406, reference may be made to step S2107 in FIG. 2A, and to other related parts in embodiments of FIG. 2A, which is not repeated herein.

At step S2407, the network device and the terminal transmit a PDCCH message based on the target TCI state switch delay.

For optional implementations of step S2407, reference may be made to step S2108 of FIG. 2A and to other related parts of embodiments of FIG. 2A, which is not repeated here.

The communication method according to embodiments of the disclosure includes at least one of steps S2401-S2407. For example, step S2401 may be implemented as an independent embodiment, step S2402 may be implemented as an independent embodiment, step S2403 may be implemented as an independent embodiment, and steps S2401 and S2402 may be implemented as an independent embodiment, which is not limited here.

Without contradiction, in an implementation/embodiment, each step may be executed independently, and steps may be arbitrarily combined or executed in different orders. Its options or optional examples may be arbitrarily combined, and may also be arbitrarily combined with any step of other implementations/embodiments.

In some embodiments, the name of "information" is not limited to those listed in embodiments. Terms "information", "message", "signal", "signaling", "report", "configuration", "indication", "instruction", "command", "channel", "parameter", "domain", "field", "symbol", "symbol", "codebook", "codeword", "codepoint", "bit", "data", "program" and "chip" are interchangeable.

In some embodiments, terms "synchronization signal (SS)", "synchronization signal block (SSB)", "reference signal (RS)", "pilot" and "pilot signal" are interchangeable.

In some embodiments, terms "moment", "time point", "time" and "time position" are interchangeable, and terms "duration", "time period", "time window", "window" and "time" are interchangeable.

In some embodiments, terms "acquire", "obtain", "gain", "receive" "transmit", "two-way transmit" and "transmit and/or receive" are interchangeable. These terms can be interpreted as "receiving from other subjects", "obtaining from protocols", "obtaining from upper layers", "processing by itself", "implementing automatically" and so on.

In some embodiments, terms such as "send", "launch", "report", "issue", "transmit", "two-way transmit" and "send and/or receive" are interchangeable.

In some embodiments, terms "certain", "preseted", "preset", "set", "indicated", "a specific", "any" and "first" are interchangeable. That is, "certain A", "preseted A", "preset A", "set A", "indicated A", "a specific A", "any A" and "first A" may be interpreted as "A prespecified in a protocol", "A obtained through setting, configuration or indication", "certain A", "a specific A", "any A" or "first A", which is not limited herein.

In some embodiments, a judgment or decision can be made based on a 1-bit value (0 or 1) or a boolean ("true" or "false"), or through comparison of values (for example, comparing a value with a preset value), which is not limited herein.

FIG. 3A is a flowchart of a communication method illustrated according to an embodiment of the disclosure. As illustrated in FIG. 3A, embodiments of the disclosure relate to a communication method. The method is performed by a terminal, and includes the following.

At step S3101, first information is received.

At step S3102, SSB(s) sent by a respective TRP corresponding to each target TCI state is/are received.

At step S3103, in a case where the single SSB reception is supported, arrival times of target SSBs sent respectively by TRPs corresponding to the at least two target TCI states are determined.

At step S3104, a first latest arrival time is determined from the arrival times of the target SSBs.

At step S3105, a common SSB processing time for TRPs is determined.

At step S3106, a sum of the first latest arrival time and the common SSB processing time is determined as a first waiting time for time-frequency tracking.

At step S3107, the target TCI state switch delay is determined based on the first waiting time.

At step S3108, a PDCCH message is received based on the target TCI state switch delay.

For optional implementations of steps S3101-S3108, reference may be made to steps S2101-S2108 of FIG. 2A and to other related parts of embodiments of FIG. 2A, which is not repeated here.

The communication method according to embodiments of the disclosure includes at least one of steps S3101-S3108. For example, step S3101 may be implemented as an independent embodiment, step S3102 may be implemented as an independent embodiment, step S3103 may be implemented as an independent embodiment, and steps S3101 and S3102 may be implemented as an independent embodiment, which is not limited here.

Without contradiction, in an implementation/embodiment, each step may be executed independently, and steps may be arbitrarily combined or executed in different orders. Its options or optional examples may be arbitrarily combined, and may also be arbitrarily combined with any step of other implementations/embodiments.

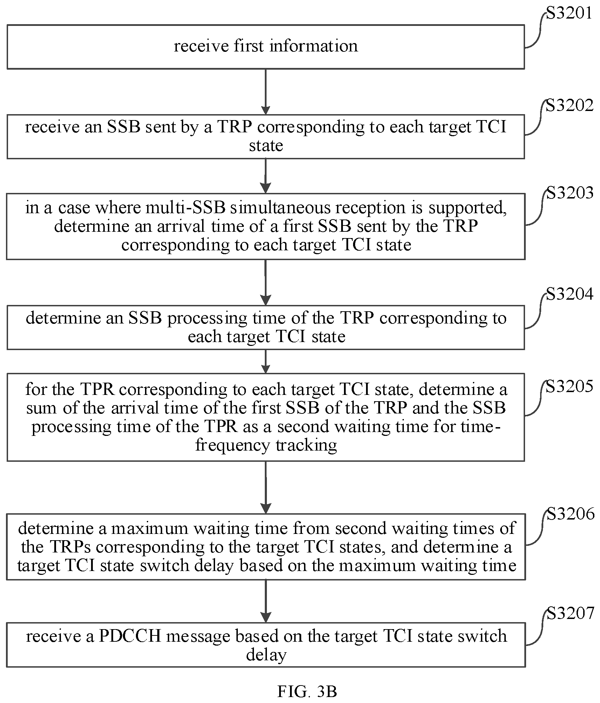

FIG. 3B is a flowchart of a communication method illustrated according to an embodiment of the disclosure. As illustrated in FIG. 3B, embodiments of the disclosure relate to a communication method. The method is performed by a terminal, and includes the following.

At step S3201, first information is received.

At step S3202, SSB(s) sent by a respective TRP corresponding to each target TCI state is/are received.

At step S3203, in a case where the multi-SSB simultaneous reception is supported, arrival times of first SSBs sent respectively by TRPs corresponding to at least two target TCI states are determined.

At step S3204, SSB processing times of the TRPs corresponding to the at least two target TCI states are determined.

At step S3205, for a respective TRP corresponding to each target TCI state, a sum of the arrival time of the first SSB of the respective TRP and the SSB processing time of the respective TRP is determined as a second waiting time for time-frequency tracking.

At step S3206, a maximum waiting time is determined from second waiting times of the TRPs corresponding to the at least two target TCI states, and the target TCI state switch delay is determined based on the maximum waiting time.

At step S3207, a PDCCH message is received based on the target TCI state switch delay.

For optional implementations of steps S3201-S3207, reference may be made to steps S2201-S2207 of FIG. 2B and to other related parts of embodiments of FIG. 2B, which is not repeated here.

The communication method according to embodiments of the disclosure includes at least one of steps S3201-S3207. For example, step S3201 may be implemented as an independent embodiment, step S3202 may be implemented as an independent embodiment, step S3203 may be implemented as an independent embodiment, and steps S3201 and S3202 may be implemented as an independent embodiment, which is not limited here.

Without contradiction, in an implementation/embodiment, each step may be executed independently, and steps may be arbitrarily combined or executed in different orders. Its options or optional examples may be arbitrarily combined, and may also be arbitrarily combined with any step of other implementations/embodiments.

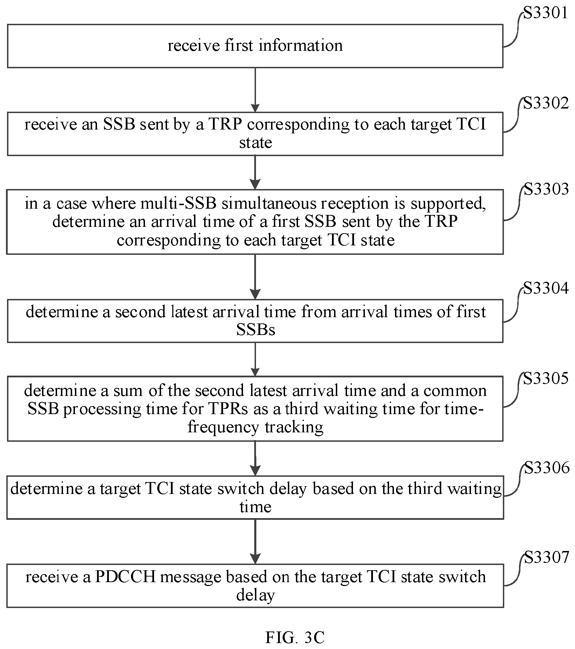

FIG. 3C is a flowchart of a communication method illustrated according to an embodiment of the disclosure. As illustrated in FIG. 3C, embodiments of the disclosure relate to a communication method. The method is performed by a terminal, and includes the following.

At step S3301, first information is received.

At step S3302, SSB(s) sent by a respective TRP corresponding to each target TCI state is/are received.

At step S3303, in a case where the multi-SSB simultaneous reception is supported, arrival times of first SSBs sent by TRPs corresponding to the at least two target TCI states are determined.

At step S3304, a second latest arrival time is determined from the arrival times of the first SSBs.

At step S3305, a sum of the second latest arrival time and a common SSB processing time for TRPs is determined as a third waiting time for time-frequency tracking.

At step S3306, the target TCI state switch delay is determined based on the third waiting time.

At step S3307, a PDCCH message is received based on the target TCI state switch delay.

For optional implementations of steps S3301-S3307, reference may be made to steps S2301-S2307 of FIG. 2C and to other related parts of embodiments of FIG. 2C, which is not repeated here.

The communication method according to embodiments of the disclosure includes at least one of steps S3301-S3307. For example, step S3301 may be implemented as an independent embodiment, step S3302 may be implemented as an independent embodiment, step S3303 may be implemented as an independent embodiment, and steps S3301 and S3302 may be implemented as an independent embodiment, which is not limited here.

Without contradiction, in an implementation/embodiment, each step may be executed independently, and steps may be arbitrarily combined or executed in different orders. Its options or optional examples may be arbitrarily combined, and may also be arbitrarily combined with any step of other implementations/embodiments.

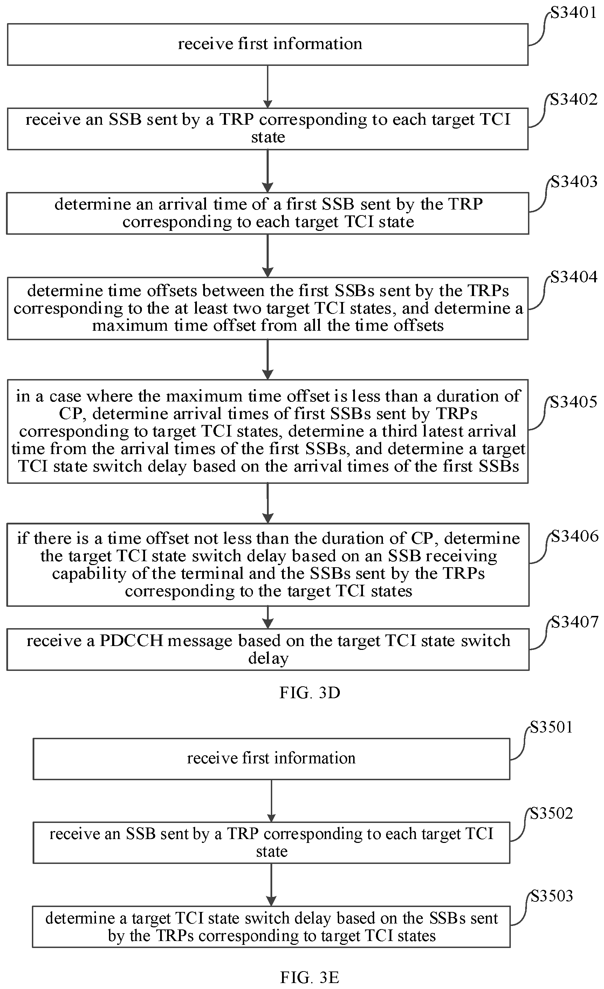

FIG. 3D is a flowchart of a communication method illustrated according to an embodiment of the disclosure. As illustrated in FIG. 3D, embodiments of the disclosure relate to a communication method. The method is performed by a terminal, and includes the following.

At step S3401, first information is received.

At step S3402, SSB(s) sent by a respective TRP corresponding to each target TCI state is/are received.

At step S3403, arrival times of first SSBs sent by TRPs corresponding to the at least two target TCI states are determined.

At step S3404, time offsets between the first SSBs sent by the TRPs corresponding to the at least two target TCI states are determined, and a maximum time offset is determined from all the time offsets.

At step S3405, in a case where the maximum time offset is less than a duration of CP, the arrival times of the first SSBs sent by the TRPs corresponding to the at least two target TCI states are determined, a third latest arrival time is determined from the arrival times of the first SSBs, and the target TCI state switch delay is determined based on the arrival times of the first SSBs.

At step S3406, if there is a time offset not less than the duration of CP, the target TCI state switch delay is determined based on an SSB receiving capability of the terminal and SSBs sent by the TRPs corresponding to the target TCI states.

At step S3407, a PDCCH message is received based on the target TCI state switch delay.

For optional implementations of steps S3401-S3407, reference may be made to steps S2401-S2407 of FIG. 2D and to other related parts of embodiments of FIG. 2D, which is not repeated here.

The communication method according to embodiments of the disclosure includes at least one of steps S3401-S3407. For example, step S3401 may be implemented as an independent embodiment, step S3402 may be implemented as an independent embodiment, step S3403 may be implemented as an independent embodiment, and steps S3401 and S3402 may be implemented as an independent embodiment, which is not limited here.

Without contradiction, in an implementation/embodiment, each step may be executed independently, and steps may be arbitrarily combined or executed in different orders. Its options or optional examples may be arbitrarily combined, and may also be arbitrarily combined with any step of other implementations/embodiments.

FIG. 3E is a flowchart of a communication method illustrated according to an embodiment of the disclosure. As illustrated in FIG. 3E, embodiments of the disclosure relate to a communication method. The method is performed by a terminal, and includes the following.

At step S3501, first information is received.

At step S3502, SSB(s) sent by a respective TRP corresponding to each target TCI state is/are received.

For optional implementations of steps S3501 and S3502, reference may be made to steps S2101 and S2102 in FIG. 2A, and to other related parts in embodiments of FIG. 2A, which is not repeated herein.

At step S3503, the target TCI state switch delay is determined based on SSB(s) sent by the respective TRP corresponding to each target TCI state.

In some implementations, in a case where the single SSB reception is supported, the arrival times of the target SSBs sent by the TRPs corresponding to the at least two target TCI states are determined, and a first latest arrival time is determined from the arrival times of the target SSBs.

In some implementations, a common SSB processing time for TRPs is obtained, a sum of the first latest arrival time and the common SSB processing time is determined as a first waiting time for time-frequency tracking, and the target TCI state switch delay is determined based on the first waiting time.

In some implementations, in a case where the multi-SSB simultaneous reception is supported, an arrival time of a first SSB sent by a respective TRP corresponding to each target TCI state is determined, and an SSB processing time of the respective TRP corresponding to each target TCI state is determined.

In some implementations, for a respective TRP corresponding to each target TCI state, a sum of the arrival time of the first SSB of the respective TRP and the SSB processing time of the respective TRP is obtained as a second waiting time for time-frequency tracking, a maximum waiting time is determined from the second waiting times of the TRPs corresponding to the target TCI states, and the target TCI state switch delay is determined based on the maximum waiting time.

In some implementations, in a case where the multi-SSB simultaneous reception is supported, the arrival time of the first SSB sent by the TRP corresponding to each target TCI state is determined, and a second latest arrival time is determined from arrival times of first SSBs.

In some implementations, a sum of the second latest arrival time and the common SSB processing time for TRPs is determined as a third waiting time for time-frequency tracking, and the target TCI state switch delay is determined based on the third waiting time.

In some implementations, the arrival time of the first SSB sent by the respective TRP corresponding to each target TCI state is determined, time offsets between the first SSBs sent by the TRPs of the at least two target TCI states are determined, and a maximum time offset is determined from all the time offsets.

In some implementations, in a case where the maximum time offset is less than a duration of CP, the arrival time of the first SSB sent by the respective TRP corresponding to each target TCI state is determined, and a third latest arrival time is determined in e arrival times of first SSBs, and the target TCI state switch delay is determined based on the arrival times of the first SSBs.

In some implementations, in a case where there is a time offset not less than the duration of CP, the target TCI state switch delay is determined based on an SSB receiving capability of the terminal and SSBs sent by the TRPs corresponding to the target TCI states.

For optional implementations of step S3503, reference may be made to steps S2103-S2107 in FIG. 2A, to steps S2203-S2206 in FIG. 2B, to steps S2303-S2306 in FIG. 2C, to steps S2403-S2406 in FIG. 2D, and to other related parts in embodiments of FIGs. 2A, 2B, 2C and 2D, which is not repeated herein.

The communication method according to embodiments of the disclosure includes at least one of steps S3501-S3503. For example, step S3501 may be implemented as an independent embodiment, step S3502 may be implemented as an independent embodiment, step S3503 may be implemented as an independent embodiment, and steps S3501 and S3502 may be implemented as an independent embodiment, which is not limited here.

Without contradiction, in an implementation/embodiment, each step may be executed independently, and steps may be arbitrarily combined or executed in different orders. Its options or optional examples may be arbitrarily combined, and may also be arbitrarily combined with any step of other implementations/embodiments.

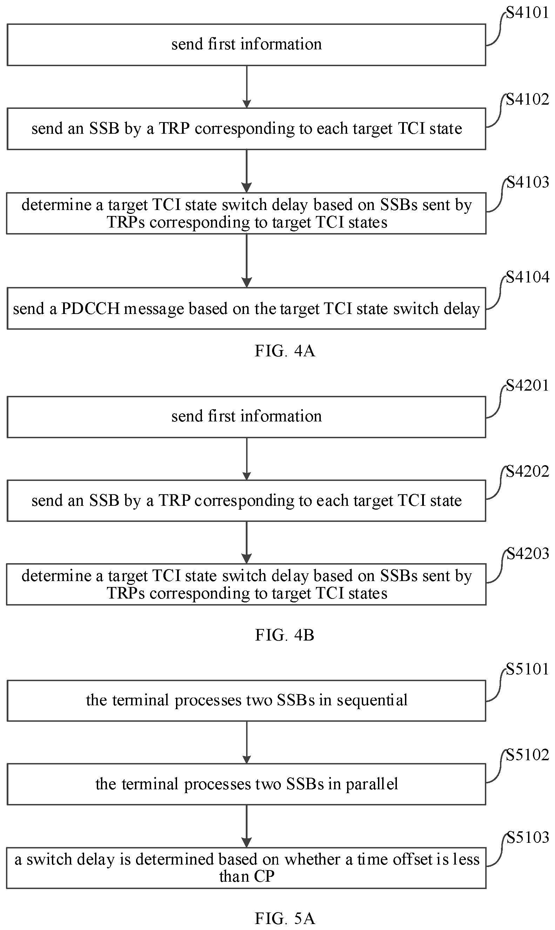

FIG. 4A is a flowchart of a communication method illustrated according to an embodiment of the disclosure. As illustrated in FIG. 4A, embodiments of the disclosure relate to a communication method. The method is performed by a network device, and includes the following.

At step S4101, first information is sent.

At step S4102, SSB(s) is/are sent by a respective TRP corresponding to each target TCI state.

At step S4103, a target TCI state switch delay is determined based on SSBs sent by the TRPs corresponding to the target TCI states.

In some implementations, in a case where the terminal supports the single SSB reception, the terminal determines an arrival time of a target SSB sent by the respective TRP corresponding to each target TCI state, and determines a first latest arrival time in arrival times of target SSBs.

In some implementations, a common SSB processing time for TRPs is determined, a sum of the first latest arrival time and the common SSB processing time is determined as a first waiting time for time-frequency tracking, and the target TCI state switch delay is determined based on the first waiting time.

In some implementations, for the method for calculating the target TCI state switch delay based on the first waiting time, reference may be made to Equation (2-1), (2-2) or (2-3) at step S2107, which is not repeated here.

In some implementations, in a case where the multi-SSB simultaneous reception is supported, an arrival time of a first SSB sent by the respective TRP corresponding to each target TCI state is determined, and an SSB processing time of the respective TRP corresponding to each target TCI state is determined.

In some implementations, for the respective TRP corresponding to each target TCI state, a sum of the arrival time of the first SSB of the respective TRP and the SSB processing time of the respective TRP is determined as a second waiting time for time-frequency tracking, a maximum waiting time is determined in second waiting times of respective TRPs corresponding to the target TCI states, and the target TCI state switch delay is determined based on the maximum waiting time.

In some implementations, for the method for calculating the target TCI state switch delay based on the maximum waiting time, reference may be made to Equation (2-4) AT step S2206, which is not repeated here.

In some implementations, in a case where the terminal supports the multi-SSB simultaneous reception, the arrival time of the first SSB sent by the respective TRP corresponding to each target TCI state is determined, and a second latest arrival time is determined in arrival times of first SSBs.

In some implementations, a sum of the second latest arrival time and a common SSB processing time for TRPs is determined as a third waiting time for time-frequency tracking, and the target TCI state switch delay is determined based on the third waiting time.

In some implementations, for the method for calculating the target TCI state switch delay based on the third waiting time, reference may be made to Equation (2-5) at step S2306, which is not repeated here.

In some implementations, the arrival time of the first SSB sent by the respective TRP corresponding to each target TCI state is determined, time offsets between the first SSBs sent by the TRPs corresponding to the at least two target TCI states is determined, and a maximum time offset is determined from all the time offsets.

In some implementations, in a case where the maximum time offset is less than a duration of CP, the arrival time of the first SSB sent by the respective TRP corresponding to each target TCI state is determined, a third latest arrival time is determined from arrival times of first SSBs, and the target TCI state switch delay is determined based on the arrival times of the first SSBs.

In some embodiments, in a case where the time offsets between the first SSBs sent by at least two TRPs are all less than the duration of CP, it is considered that the first SSBs sent by the at least two TRPs are slightly overlapped, which may not affect the reliability of transmission of effective information in SSBs. In this case, the first SSB sent by each TRP may be determined as a target SSB.

In some implementations, in a case where there is a time offset not less than the duration of CP, the target TCI state switch delay is determined based on an SSB receiving capability of the terminal and SSBs sent by the TRPs corresponding to the target TCI states.

For optional implementations of step S4103, reference may be made to steps S2103-S2107 in FIG. 2A, to steps S2203-S2206 in FIG. 2B, to steps S2303-S2306 in FIG. 2C, to steps S2403-S2406 in FIG. 2D, and to other related parts in embodiments of FIGs. 2A, 2B, 2C and 2D, which is not repeated herein.

At step S4104, a PDCCH message is sent based on the target TCI state switch delay.

For optional implementations of steps S4101, S4102 and step S4104, reference may be made to steps S2101, S2102 and S2108 in FIG. 2A, and to other related parts in embodiments of FIG. 2A, which is not repeated herein.

The communication method according to embodiments of the disclosure includes at least one of steps S4101-S4104. For example, step S4101 may be implemented as an independent embodiment, step S4102 may be implemented as an independent embodiment, step S4103 may be implemented as an independent embodiment, and steps S4101 and S4102 may be implemented as an independent embodiment, which is not limited here.

Without contradiction, in an implementation/embodiment, each step may be executed independently, and steps may be arbitrarily combined or executed in different orders. Its options or optional examples may be arbitrarily combined, and may also be arbitrarily combined with any step of other implementations/embodiments.

FIG. 4B is a flowchart of a communication method illustrated according to an embodiment of the disclosure. As illustrated in FIG. 4B, embodiments of the disclosure relate to a communication method. The method is performed by a network device, and includes the following.

At step S4201, first information is sent.

At step S4202, SSB(s) is/are sent by a respective TRP corresponding to each target TCI state.

At step S4203, the target TCI state switch delay is determined based on SSBs sent by the TRPs corresponding to the target TCI states.

For optional implementations of steps S4201-S4203, reference may be made to steps S4101 and S4102 in FIG. 4A, and to other related parts in embodiments of FIG. 4A, which is not repeated herein.

The communication method according to embodiments of the disclosure includes at least one of steps S4201-S4203. For example, step S4201 may be implemented as an independent embodiment, step S4202 may be implemented as an independent embodiment, step S4203 may be implemented as an independent embodiment, and steps S4201 and S4202 may be implemented as an independent embodiment, which is not limited here.

Without contradiction, in an implementation/embodiment, each step may be executed independently, and steps may be arbitrarily combined or executed in different orders. Its options or optional examples may be arbitrarily combined, and may also be arbitrarily combined with any step of other implementations/embodiments.

FIG. 5A is a flowchart of a communication method illustrated according to an embodiment of the disclosure. As illustrated in FIG. 5A, embodiments of the disclosure relate to a communication method. The method includes the following.

At step S5101, the terminal can only process two SSBs in sequential.

In sDCI mTRP scenario, since two TCI states will be activated, some extra conditions need to be considered, namely time/frequency tracking for the two TCI states.

For a single TRP, the time-frequency tracking is: $T_{first\text{-}SSB} + T_{SSB\text{-}proc}$, where $T_{first\text{-}SSB}$ represents a time when a first SSB sent from the TRP is received after a MAC CE command is received.

For multiple TRPs (mTRP), time/frequency tracking will be performed for each TRP separately. The time/-frequency tracking will be implemented based on an SSB corresponding to each TRP. However, these two SSBs may be overlapped with each other as shown in FIG. 2E.

Since there will be a timing difference between two different TRPs, even when two SSBs are adjacent, the two SSBs may still be partially overlapped due to a timing offset as shown in FIG. 2E.

If the two SSBs are overlapped, the terminal may not be able to process the SSBs in parallel. For example, the terminal may only perform the time/frequency tracking for one SSB at each time. However, if the terminal can process the two SSBs in parallel, there is no dependency for the processing of two SSBs. The delay requirement will be defined based on the capabilities of the terminal.

If the terminal does not have two parallel processors to handle the overlapped SSBs, the terminal can only perform the time/frequency tracking for one SSB at each time. For example, if the two SSBs are overlapped completely or partially in slot 1, the terminal can only process SSB from TRP1 in slot 1, and then wait for the second SSB for TRP2 and process it. The terminal may drop the SSB from the TRP whose SSB arrives later, so the switch delay is:

$$n + T_{HARQ} + 3N_{slot}^{subframe,\mu} + TO_k * max((T_{\text{first}-SSB-TPR1} + T_{\text{SSB-proc}}), (T_{2nd-SSB-TRP2}$$

$$+ T_{\text{SSB-proc}})) / NR\ slot\ length$$

where $T_{first\text{-}SSB\text{-}TRP1}$ represents the arrival time of the first SSB from TRP1, and $T_{2nd\text{-}SSB\text{-}TRP2}$ represents the arrival time of the second SSB from TRP2.

If $T_{2nd\text{-}SSB\text{-}TRP2}$ is always later than $T_{first\text{-}SSB\text{-}TRP1}$, the switch delay may be rewritten as:

$$n + T_{HARQ} + 3N_{slot}^{subframe,\mu} + TO_k * (T_{2nd-SSB-TRP2} + T_{\text{SSB-proc}})/ NR\ slot\ length$$

At step S5102, the terminal can process two SSBs in parallel.

If the terminal is able to process the two SSBs that are completely or partially overlapped by two processors, the terminal can process each SSB independently. Since the ending point of delay requirement is that the terminal finishes TCI states for both SSBs. Therefore, the total delay will depend on maximum time/frequency tracking times between the two SSBs. It will depend on the SSB location relative to the MAC CE command, so the switch delay is:

$$n + T_{HARQ} + 3N_{slot}^{subframe,\mu} + TO_k * max((T_{\text{first-SSB-TPR1}} + T_{\text{SSB-proc-TPR1}}), (T_{first-SSB-TRP2}$$

$$+ T_{\text{SSB-proc-TPR2}})) / NR\ slot\ length$$

or

$$n + T_{HARQ} + 3N_{slot}^{subframe,\mu} + TO_k * (max(T_{\text{first-SSB-TPR1}}, T_{first-SSB-TRP2})$$

$$+ T_{\text{SSB-proc}}) / NR\ slot\ length$$

where $T_{\text{first-SSB-TRP1}}$ represents the arrival time of the first SSB from TRP1, and $T_{2nd-SS-TRP2}$ represents the arrival time of the second SSB from TRP2.

At step S5103, the switch delay is determined based on whether a time offset is less than CP.

The time offset will also have an impact on the terminal procedure to process two SSBs. For example, if the time offset is less than CP, SSB signals of the two TRPs will not be broken, and the terminal can still receive and process the two SSBs in parallel. When the time offset is less than CP, there is no need to differentiate the requirement with UE capability. The delay requirement will be similar to the case where the terminal is capable of processing two SSBs in parallel.

The switch delay is:

$$n + T_{HARQ} + 3N_{slot}^{subframe,\mu} + TO_k * max((T_{\text{first-SSB-TPR1}} + T_{\text{SSB-proc-TPR1}}), (T_{first-SSB-TRP2}$$

$$+ T_{\text{SSB-proc-TPR2}})) / NR\ slot\ length$$

or

$$n + T_{HARQ} + 3N_{slot}^{subframe,\mu} + TO_k * (max(T_{\text{first-SSB-TPR1}}, T_{first-SSB-TRP2})$$

$$+ T_{\text{SSB-proc}}) / NR\ slot\ length$$

where $T_{\text{first-SSB-TRP1}}$ represents the arrival time of the first SSB from TRP1, and $T_{2nd-SSB-TRP2}$ represents the arrival time of the second SSB from TRP2.

Embodiments of the disclosure provide an apparatus for implementing any of the above methods. For example, an apparatus is provided, which includes units/modules for implementing steps performed by the terminal in any of the above methods. As another example, another apparatus is provided, which includes units/modules for implementing steps performed by the network device (e.g., AN device, CN functional node and CN device) in any of the above methods.

It should be understood that the units/modules in the above apparatus are divided based on their logical functions, and some or all of the above units/modules may be integrated on a single physical entity or may be physically separated in practical applications. In addition, the units/modules in the above apparatus may be implemented by software called by a processor. For example, the apparatus includes the processor that is connected to a memory. The memory stores indications, and the processor calls the indications stored in the memory to implement any of the above methods or to implement functions of the units/modules in the above apparatus. The processor may be a general-purpose processor, such as a central processing unit (CPU) or a micro-processor, and the memory is a memory in the apparatus or a memory external to the apparatus. Or, the units/modules in the apparatus may be implemented in the form of a hardware circuit. Some or all of the functions of the units/modules may be achieved through the design of the hardware circuit. The hardware circuit may be understood as one or more processors. For example, in an implementation, the hardware circuit is an application-specific integrated circuit (ASIC). Or, some or all of the functions of the units/modules are achieved through the design of a logical relationship between components in the circuit. As another example, in another implementation, the hardware circuit may be implemented through a programmable logic device (PLD). Taking a field programmable gate array (FPGA) as an example, a large number of logical gates are included therein, and their connection relationships are configured through a configuration file to implement some or all of the functions of the above units/modules. All the units/modules of the above apparatus may be implemented entirely through the software called by the processor, or entirely through the hardware circuit, or partially through the software called by the processor and partially through the hardware circuit.

In embodiments of the disclosure, the processor is a circuit having signal processing capabilities. In an implementation, the processor may be a circuit having indication reading and executing capabilities, such as a CPU, a micro-processor, a graphics processing unit (GPU) (which is understood as a micro-processor), or a digital signal processor (DSP). In another implementation, the processor implements certain functions through the logical relationship of the hardware circuit, which may be fixed or re-configurable. For example, the processor may be a hardware circuit implemented by an ASIC or a PLD, such as FPGA. In the re-configurable hardware circuit, the procedure for the processor to load the configuration file to configure the hardware circuit is understood as a procedure for the processor to load the indications to implement some or all of the functions of the above units/modules. In addition, the processor may also be an artificial intelligence (AI)-designed hardware circuit, which is understood as an ASIC, such as a neural network processing unit (NPU), a tensor processing unit (TPU) and a deep learning processing unit (DPU).

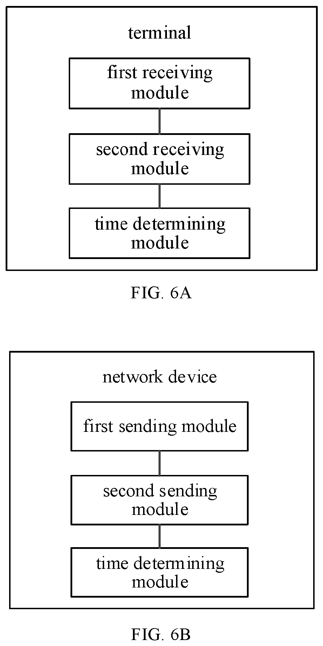

FIG. 6A is a schematic structural diagram of a terminal according to an embodiment of the disclosure. As illustrated in FIG. 6A, the terminal 6100 includes at least one of a first receiving module 6101, a second receiving module 6102 or a time determining module 6103. In some embodiments, the first receiving module 6101 is configured to receive first information, in which the first information is configured for activating at least two target TCI states. The second receiving module 6102 is configured to receive SSB(s) sent by a respective TRP corresponding to each target TCI state, in which first SSBs sent by the TRPs corresponding to the at least two target TCI states are overlapped in the time domain. The time determining module 6103 is configured to determine a target TCI state switch delay based on SSBs sent by the TRPs corresponding to the at least two target TCI states.

FIG. 6B is a schematic structural diagram of a network device according to an embodiment of the disclosure. As illustrated in FIG. 6B, the network device 6200 includes at least one of a first sending module 6201, a second sending module 6202 or a time determining module 6203. In some embodiments, the first sending module 6201 is configured to send first information, in which the first information is configured for activating at least two target TCI states. The second sending module 6202 is configured to send SSB(s) by a respective TRP corresponding to each target TCI state, in which first SSBs sent by the TRPs corresponding to the at least two target TCI states are overlapped in the time domain. The time determining module 6203 is configured to determine a target TCI state switch delay based on the SSBs sent by the TRPs corresponding to the at least two target TCI states.

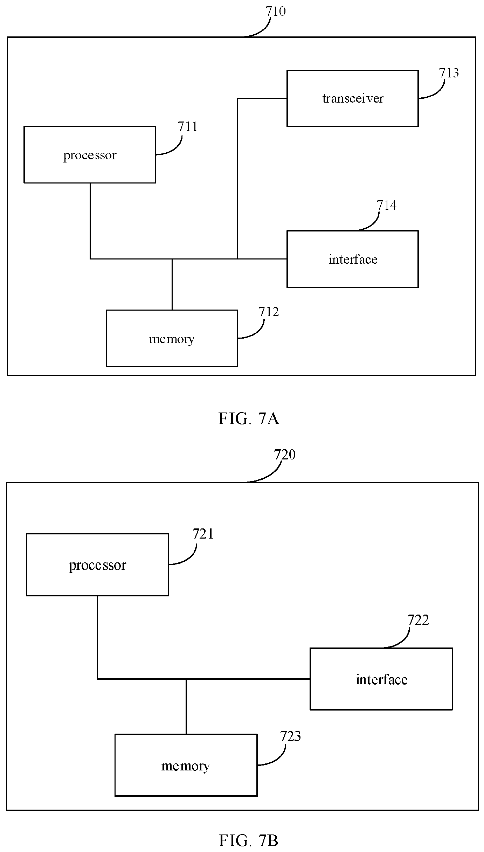

FIG. 7A is a schematic structural diagram of a communication device 7100 according to an embodiment of the disclosure. The communication device 7100 may be a network device (e.g., an AN device or a CN device), a terminal (e.g., UE), a chip, a chip system or a processor that supports the network device to implement any of the above methods, or a chip, a chip system or a processor that supports the terminal to implement any of the above methods. The communication device 7100 is used to implement the methods described in the above method embodiments, and reference may be made to the descriptions in the above method embodiments.

As illustrated in FIG. 7A, the communication device 7100 includes one or more processors 7101. The processor 7101 may be a general-purpose processor or a dedicated processor, such as a baseband processor or a central processor. The baseband processor is used to process communication protocols and communication data, while the central processor is used to control the communication device (e.g., a BS, a baseband chip, a terminal, a terminal chip, a DU or a CU), execute programs, and process data of the programs. The communication device 7100 is used to implement any of the above methods.

In some embodiments, the communication device 7100 further includes one or more memories 7102 for storing indications. For example, all or part of the memories 7102 are external to the communication device 7100.

In some embodiments, the communication device 7100 includes one or more transceivers 7103. In this case, the transceiver 7103 performs at least one of the communication steps such as transmission and/or reception in the above methods, and the processor 7101 performs at least one of other steps.

In some embodiments, the transceiver may include a receiver and/or a transmitter. The receiver and the transmitter may be separated or integrated together. For example, terms "transceiver", "transceiver unit", "transceiver machine" and "transceiver circuit" are interchangeable, and terms "transmitter", "transmitting unit", "transmitter machine" and "transmitting circuit" are also interchangeable. In addition, terms "receiver", "receiving unit", "receiver machine" and "receiving circuit" are interchangeable.

In some embodiments, the communication device 7100 further includes one or more interface circuits 7104. For example, the interface circuit 7104 is connected with the memory 7102, and it is used to receive signals from the memory 7102 or other devices and send signals to the memory 7102 or other devices. For example, the interface circuit 7104 can read the indications stored in the memory 7102 and send the indications to the processor 7101.

The communication device 7100 described in above embodiments may be a network device or a terminal. However, the scope of the communication device 7100 is not limited in the disclosure, and the structure of the communication device 7100 is not limited by FIG. 7A. The communication device may be a standalone device or part of a larger device. For example, the communication device may be: (1) a standalone integrated circuit (IC), a chip, a chip system or a sub-system; (2) a collection of one or more ICs (optionally, the collection includes storage components for storing data and programs); (3) an ASIC, such as a modem; (4) a module that can be embedded in other devices; (5) a receiver, a terminal, a smart terminal, a cellular phone, a wireless device, a handheld device, a mobile unit, an in-vehicle device, a network device, a cloud device, an AI device, etc.; or (6) others.

FIG. 7B is a schematic structural diagram of a chip 7200 according to an embodiment of the disclosure. For the case that the communication device 7100 is a chip or a chip system, reference may be made to the schematic structural diagram of the chip 7200 shown in FIG. 7B, which is not limited herein.

The chip 7200 includes one or more processors 7201, and is used to implement any of the above methods.

In some embodiments, the chip 7200 includes one or more interface circuits 7202. Optionally, the interface circuit 7202 is connected to a memory 7203, and it is used to receive signals from the memory 7203 or other devices and send signals to the memory 7203 or other devices. For example, the interface circuit 7202 can read indications stored in the memory 7203 and send the indications to the processor 7201.

In some embodiments, the interface circuit 7202 performs at least one of the communication steps such as transmission and/or reception in the above methods, and the processor 7201 performs at least one of other steps.

In some embodiments, terms "interface circuit", "interface", "transceiver pin" and "transceiver" are interchangeable.

In some embodiments, the chip 7200 further includes one or more memories 7203 for storing indications. For example, all or part of the memories 7203 are external to the chip 7200.

The disclosure also provides a storage medium. The storage medium stores indications, and when the indications are executed by the communication device 7100, the communication device 7100 is caused to implement any of the above methods. For example, the storage medium is an electronic storage medium. For example, the storage medium may be a computer-readable storage medium or a storage medium readable by other devices, which is not limited herein. For example, the storage medium may be a non-transitory storage medium or a transitory storage medium, which is not limited herein.

The disclosure also provides a program product. When the program product is executed by the communication device 7100, the communication device 7100 is caused to implement any of the above methods. For example, the program product is a computer program product.

The disclosure also provides a computer program. When the computer program is executed by a computer, the computer is caused to implement any of the above methods.

## Claims

1. A communication method, performed by a terminal, comprising:

   receiving first information, wherein the first information is configured for activating at least two target transmission configuration indicator (TCI) states;
   receiving a synchronization signal block (SSB) sent by a transmission reception point (TRP) corresponding to each of the at least two target TCI states, wherein first SSBs sent by TRPs corresponding to the at least two target TCI states are overlapped in a time domain; and
   determining a target TCI state switch delay based on SSBs sent by the TRPs corresponding to the at least two target TCI states.

2. The method of claim 1, wherein after determining the target TCI state switch delay based on the SSBs sent by the TRPs corresponding to the at least two target TCI states, the method further comprises:
   receiving physical downlink control channel (PDCCH) sent by the TRP corresponding to each of the at least two target TCI states based on the target TCI state switch delay.

3. The method of claim 1, wherein determining the target TCI state switch delay based on the SSBs sent by the TRPs corresponding to the at least two target TCI states comprises:

   determining an SSB receiving capability of the terminal; and
   determining the target TCI state switch delay based on the SSB receiving capability and the SSBs sent by the TRPs corresponding to the at least two target TCI states.

4. The method of claim 3, wherein the SSB receiving capability comprises:

single SSB reception, or multi-SSB simultaneous reception.

5. The method of claim 4, wherein determining the target TCI state switch delay based on the SSBs sent by the TRPs corresponding to the at least two target TCI states comprises:

in a case where the terminal supports the single SSB reception, determining an arrival time of a target SSB sent by the TRP corresponding to each of the at least two target TCI states, wherein transmission occasions corresponding to target SSBs of different TRPs are different;
determining a first latest arrival time based on the arrival time of each target SSB; and
determining the target TCI state switch delay based on the first latest arrival time.

6. The method of claim 5, wherein determining the target TCI state switch delay based on the first latest arrival time comprises:

determining a common SSB processing time for TRPs;
determining a sum of the first latest arrival time and the common SSB processing time as a first waiting time for time-frequency tracking; and
determining the target TCI state switch delay based on the first waiting time.

7. The method of claim 5, wherein in a case where the TRPs corresponding to the at least two target TCI states comprise a first TRP and a second TRP, the method further comprises:

determining a first arrival time of a first SSB sent from the first TRP;
determining a second arrival time of a second SSB sent from the second TRP; and
determining the first latest arrival time from the first arrival time and the second arrival time.

8. The method of claim 4, wherein determining the target TCI state switch delay based on the SSBs sent by the TRPs corresponding to the at least two target TCI states comprises:

in a case where the terminal supports the multi-SSB simultaneous reception, determining an arrival time of a first SSB sent by the TRP corresponding to each of the at least two target TCI states; and
determining the target TCI state switch delay based on the arrival time of each first SSB.

9. The method of claim 8, wherein determining the target TCI state switch delay based on the arrival time of each first SSB comprises:

determining an SSB processing time of the TRP corresponding to each of the at least two target TCI states;
for the TRP corresponding to each of the at least two target TCI states, determining a sum of the arrival time of the first SSB of the TRP and the SSB processing time of the TRP as a second waiting time for time-frequency tracking; and
determining a maximum waiting time in second waiting times of the TRPs corresponding to the at least two target TCI states, and determining the target TCI state switch delay based on the maximum waiting time.

10. The method of claim 8, wherein determining the target TCI state switch delay based on the arrival time of each first SSB comprises:

determining a second latest arrival time from arrival times of first SSBs;
determining a sum of the second latest arrival time and a common SSB processing time for TRPs as a third waiting time for time-frequency tracking; and
determining the target TCI state switch delay based on the third waiting time.

11. The method of claim 4, further comprising:

in a case where the terminal supports the single SSB reception, processing the SSBs sent by the TRPs corresponding to the at least two target TCI states in sequential; or
in a case where the terminal supports the multi-SSB simultaneous reception, processing the SSBs sent by the TRPs corresponding to the at least two target TCI states in parallel.

12. The method of claim 1, further comprising:

determining time offsets between the first SSBs sent by the TRPs corresponding to the at least two target TCI states, and determining a maximum time offset from the time offsets;
in a case where the maximum time offset is less than a duration of cyclic prefix (CP), determining arrival times of the first SSBs sent by the TRPs corresponding to the at least two target TCI states, determining a third latest arrival time from the arrival times of the first SSBs, and determining the target TCI state switch delay based on the arrival times of the first SSBs; or
in a case where there is a time offset not less than the duration of CP, determining the target TCI state switch delay based on an SSB receiving capability of the terminal and the SSBs sent by the TRPs corresponding to the at least two target TCI states.

13. A communication method, performed by a network device, comprising:

sending first information, wherein the first information is configured for activating at least two target transmission configuration indicator (TCI) states;
sending a synchronization signal block (SSB) by a transmission and receiving point (TRP) corresponding to each of the at least two target TCI states, wherein first SSBs sent by TRPs corresponding to the at least two target TCI states are overlapped in a time domain; and
determining a target TCI state switch delay based on SSBs sent by the TRPs corresponding to the at least two target TCI states.

14. The method of claim 13, wherein after determining the target TCI state switch delay based on the SSBs sent by the TRPs corresponding to the at least two target TCI states, the method further comprises:
sending a physical downlink control channel (PDCCH) by the TRPs corresponding to the at least two target TCI states based on the target TCI state switch delay.

15. The method of claim 13, wherein determining the target TCI state switch delay based on the SSBs sent by the TRPs corresponding to the at least two target TCI states comprises:

determining an SSB receiving capability of a terminal; and
determining the target TCI state switch delay based on the SSB receiving capability and the SSBs sent by the TRPs corresponding to the at least two target TCI states.

16. The method of claim 15, wherein the SSB receiving capability comprises: single SSB reception, or multi-SSB simultaneous reception.

17. The method of claim 16, wherein determining the target TCI state switch delay based on the SSBs sent by the TRPs corresponding to the at least two target TCI states comprises:

in a case where the terminal supports the single SSB reception, determining an arrival time of a target SSB sent by the TRP corresponding to each of the at least two target TCI states, wherein transmission occasions corresponding to target SSBs of different TRPs are different;
determining a first latest arrival time from arrival times of the target SSBs; and
determining the target TCI state switch delay based on the first latest arrival time.

18. The method of claim 17, wherein determining the target TCI state switch delay based on the first latest arrival time comprises:

determining a common SSB processing time for TRPs;
determining a sum of the first latest arrival time and the common SSB processing time as a first waiting time for time-frequency tracking; and
determining the target TCI state switch delay based on the first waiting time.

19. The method of claim 17, wherein in a case where the TRPs corresponding to the at least two target TCI states comprise a first TRP and a second TRP, the method further comprises:

determining a first arrival time of a first SSB sent from the first TRP;

determining a second arrival time of a second SSB sent from the second TRP; and

determining the first latest arrival time from the first arrival time and the second arrival time.

20. The method of claim 16, wherein determining the target TCI state switch delay based on the SSBs sent by the TRPs corresponding to the at least two target TCI states comprises:

in a case where the terminal supports the multi-SSB simultaneous reception, determining an arrival time of a first SSB sent by the TRP corresponding to each of the at least two target TCI states; and

determining the target TCI state switch delay based on the arrival time of each first SSB.

21. The method of claim 20, wherein determining the target TCI state switch delay based on the arrival time of each first SSB comprises:

determining an SSB processing time of the TRP corresponding to each of the at least two target TCI states;

for the TRP corresponding to each of the at least two target TCI states, determining a sum of the arrival time of the first SSB of the TRP and the SSB processing time of the TRP as a second waiting time for time-frequency tracking; and

determining a maximum waiting time from second waiting times of the TRPs corresponding to the at least two target TCI states, and determining the target TCI state switch delay based on the maximum waiting time.

22. The method of claim 20, wherein determining the target TCI state switch delay based on the arrival time of each first SSB comprises:

determining a second latest arrival time from arrival times of first SSBs;

determining a sum of the second latest arrival time and a common SSB processing time for TRPs as a third waiting time for time-frequency tracking; and

determining the target TCI state switch delay based on the third waiting time.

23. The method of claim 13, further comprising:

determining time offsets between the first SSBs sent by the TRPs corresponding to the at least two target TCI states, and determining a maximum time offset from the time offsets;

in a case where the maximum time offset is less than a duration of cyclic prefix (CP), determining arrival times of the first SSBs sent by the TRPs corresponding to the at least two target TCI states, determining a third latest arrival time from the arrival times of the first SSBs, and determining the target TCI state switch delay based on the arrival times of the first SSBs; or

in a case where there is a time offset not less than the duration of CP, determining the target TCI state switch delay based on an SSB receiving capability of a terminal and the SSBs sent by the TRPs corresponding to the at least two target TCI states.

24. A terminal, comprising:

a first receiving module, configured to receive first information, wherein the first information is configured for activating at least two target transmission configuration indicator (TCI) states;

a second receiving module, configured to receive a synchronization signal block (SSB) sent by a transmission reception point (TRP) corresponding to each of the at least two target TCI states, wherein first SSBs sent by TRPs corresponding to the at least two target TCI states are overlapped in a time domain; and

a time determining module, configured to determine a target TCI state switch delay based on SSBs sent by the TRPs corresponding to the at least two target TCI states.

25. A network device, comprising:

a first sending module, configured to send first information, wherein the first information is configured for activating at least two target transmission configuration indicator (TCI) states;

a second sending module, configured to send a synchronization signal block (SSB) by a transmission reception point (TRP) corresponding to each of the at least two target TCI states, wherein first SSBs sent by TRPs corresponding to the at least two target TCI states are overlapped in a time domain; and

a time determining module, configured to determine a target TCI state switch delay based on SSBs sent by the TRPs corresponding to the at least two target TCI states.

26. A communication system, comprising a terminal and a network device, wherein the terminal is configured to implement the communication method of any one of claims 1 to 12, and the network device is configured to implement the communication method of any one of claims 13 to 23.

27. A storage medium, having instructions stored thereon, wherein when the instructions are executed by a communication device, the communication device is caused to implement the communication method of any one of claims 1 to 12 or the communication method of any one of claims 13 to 23.

communication system 100

terminal 101 ——— network device 102

FIG. 1

---

terminal 101

network device 102

S2101: send first information

S2102: send an SSB by a TRP corresponding to each target TCI state

S2103: in a case where single SSB reception is supported, determine an arrival time of a target SSB sent by the TRP corresponding to each target TCI state

S2104: determine a first latest arrival time in arrival times of target SSBs

S2105: determine a common SSB processing time for TPRs

S2106: determine a sum of the first latest arrival time and the common SSB processing time as a first waiting time for time-frequency tracking

S2107: determine a target TCI state switch delay based on the first waiting time

S2108: transmit a PDCCH message based on the target TCI state switch delay

FIG. 2A

terminal 101

network device 102

S2201: send first information

S2202: send an SSB by a TRP corresponding to each target TCI state

S2203: in a case where multi-SSB simultaneous reception is supported, determine an arrival time of a first SSB sent by the TRP corresponding to each target TCI state

S2204: determine an SSB processing time corresponding to each TRP

S2205: for the TPR corresponding to the target TCI state, determine a sum of the arrival time of the first SSB of the TRP and the SSB processing time of the TPR as a second waiting time for time-frequency tracking

S2206: determine the maximum waiting time from second waiting times of the TRPs corresponding to the target TCI states, and determine the target TCI state switch delay based on the maximum waiting time

S2207: transmit a PDCCH message based on the target TCI state switch delay

FIG. 2B

```
┌─────────────────┐                                    ┌──────────────────────┐
│  terminal 101   │                                    │  network device 102  │
└────────┬────────┘                                    └───────────┬──────────┘
         │            S2301: send first information                │
         │◄─────────────────────────────────────────────────────  │
         │                                                         │
         │     S2302: send an SSB by a TRP corresponding to each   │
         │                    target TCI state                     │
         │◄─────────────────────────────────────────────────────  │
         │                                                         │
┌────────┴────────────────────────┐                               │
│  S2303: in a case where multi-SSB│                               │
│  simultaneous reception is       │                               │
│  supported, determine an arrival │                               │
│  time of a first SSB sent by the │                               │
│  TRP corresponding to each       │                               │
│  target TCI state                │                               │
└────────┬────────────────────────┘                               │
┌────────┴────────────────────────┐                               │
│  S2304: determine a second latest│                               │
│  arrival time from arrival times │                               │
│  of first SSBs                   │                               │
└────────┬────────────────────────┘                               │
┌────────┴────────────────────────┐                               │
│  S2305: determine a sum of the   │                               │
│  second latest arrival time and a│                               │
│  common SSB processing time for  │                               │
│  TPRs as a third waiting time for│                               │
│  time-frequency tracking         │                               │
└────────┬────────────────────────┘                               │
┌────────┴────────────────────────┐                               │
│  S2306: determine a target TCI   │                               │
│  state switch delay based on the │                               │
│  third waiting time              │                               │
└────────┬────────────────────────┘                               │
         │   S2307: transmit a PDCCH message based on the target   │
         │                TCI state switch delay                   │
         │◄──────────────────────────────────────────────────────►│
         │                                                         │
```

FIG. 2C

```
┌─────────────────────┐                                    ┌─────────────────────┐
│     terminal 101     │                                    │  network device 102 │
└─────────────────────┘                                    └─────────────────────┘
          │                                                            │
          │          S2401: send first information                     │
          │◄───────────────────────────────────────────────────────── │
          │    S2402: send an SSB by a TRP corresponding to each       │
          │                   target TCI state                         │
          │◄───────────────────────────────────────────────────────── │
┌─────────────────────────────────┐                                    │
│ S2403: determine an arrival time │                                   │
│ of a first SSB sent by the TRP   │                                   │
│ corresponding to each target TCI │                                   │
│ state                            │                                   │
└─────────────────────────────────┘                                    │
┌─────────────────────────────────┐                                    │
│ S2404: determine time offsets    │                                   │
│ between the first SSBs sent by   │                                   │
│ the TRPs corresponding to the at │                                   │
│ least two target TCI states, and │                                   │
│ determine a maximum time offset  │                                   │
│ from the time offsets            │                                   │
└─────────────────────────────────┘                                    │
┌─────────────────────────────────┐                                    │
│ S2405: in a case where the       │                                   │
│ maximum time offset is less than │                                   │
│ a duration of CP, determine      │                                   │
│ arrival times of first SSBs sent │                                   │
│ by TRPs corresponding to target  │                                   │
│ TCI states, determine a third    │                                   │
│ latest arrival time from the     │                                   │
│ arrival times of the first SSBs, │                                   │
│ and determine the target TCI     │                                   │
│ state switch delay based on the  │                                   │
│ arrival times of the first SSBs  │                                   │
└─────────────────────────────────┘                                    │
┌─────────────────────────────────┐                                    │
│ S2406: if there is a time offset │                                   │
│ not less than the duration of    │                                   │
│ CP, determine the target TCI     │                                   │
│ state switch delay based on an   │                                   │
│ SSB receiving capability of the  │                                   │
│ terminal and the SSBs sent by    │                                   │
│ the TRPs corresponding to the    │                                   │
│ target TCI states                │                                   │
└─────────────────────────────────┘                                    │
          │     S2407: transmit a PDCCH message based on               │
          │            the target TCI state switch delay               │
          │◄─────────────────────────────────────────────────────────►│
          │                                                            │
```

FIG. 2D

First SSB of TRP#1

First SSB of TRP#2

(a)

First SSB of TRP#1

Timing offset

First SSB of TRP#2

(b)

FIG. 2E

| receive first information | S3101 |

| receive an SSB sent by a TRP corresponding to each target TCI state | S3102 |

| in a case single SSB reception is supported, determine an arrival time of a target SSB sent by the TRP corresponding to each target TCI state | S3103 |

| determine a first latest arrival time from arrival times of target SSBs | S3104 |

| determine a common SSB processing time for TPRs | S3105 |

| determine a sum of the first latest arrival time and the common SSB processing time as a first waiting time for time-frequency tracking | S3106 |

| determine a target TCI state switch delay based on the first waiting time | S3107 |

| receive a PDCCH message based on the target TCI state switch delay | S3108 |

FIG. 3A

receive first information — S3201

↓

receive an SSB sent by a TRP corresponding to each target TCI state — S3202

↓

in a case where multi-SSB simultaneous reception is supported, determine an arrival time of a first SSB sent by the TRP corresponding to each target TCI state — S3203

↓

determine an SSB processing time of the TRP corresponding to each target TCI state — S3204

↓

for the TPR corresponding to each target TCI state, determine a sum of the arrival time of the first SSB of the TRP and the SSB processing time of the TPR as a second waiting time for time-frequency tracking — S3205

↓

determine a maximum waiting time from second waiting times of the TRPs corresponding to the target TCI states, and determine a target TCI state switch delay based on the maximum waiting time — S3206

↓

receive a PDCCH message based on the target TCI state switch delay — S3207

FIG. 3B

receive first information $\qquad$ S3301

$\downarrow$

receive an SSB sent by a TRP corresponding to each target TCI state $\qquad$ S3302

$\downarrow$

in a case where multi-SSB simultaneous reception is supported, determine an arrival time of a first SSB sent by the TRP corresponding to each target TCI state $\qquad$ S3303

$\downarrow$

determine a second latest arrival time from arrival times of first SSBs $\qquad$ S3304

$\downarrow$

determine a sum of the second latest arrival time and a common SSB processing time for TPRs as a third waiting time for time-frequency tracking $\qquad$ S3305

$\downarrow$

determine a target TCI state switch delay based on the third waiting time $\qquad$ S3306

$\downarrow$

receive a PDCCH message based on the target TCI state switch delay $\qquad$ S3307

FIG. 3C

```
                                                                    S3401
┌─────────────────────────────────────────────────────────┐
│              receive first information                  │
└─────────────────────────────────────────────────────────┘
                            │
                            ▼                               S3402
┌─────────────────────────────────────────────────────────┐
│  receive an SSB sent by a TRP corresponding to each target TCI │
│                          state                          │
└─────────────────────────────────────────────────────────┘
                            │
                            ▼                               S3403
┌─────────────────────────────────────────────────────────┐
│    determine an arrival time of a first SSB sent by the TRP    │
│            corresponding to each target TCI state         │
└─────────────────────────────────────────────────────────┘
                            │
                            ▼                               S3404
┌─────────────────────────────────────────────────────────┐
│  determine time offsets between the first SSBs sent by the TRPs │
│ corresponding to the at least two target TCI states, and determine a │
│          maximum time offset from all the time offsets    │
└─────────────────────────────────────────────────────────┘
                            │
                            ▼                               S3405
┌─────────────────────────────────────────────────────────┐
│  in a case where the maximum time offset is less than a duration of │
│              CP, determine arrival times of first SSBs sent by TRPs │
│  corresponding to target TCI states, determine a third latest arrival │
│ time from the arrival times of the first SSBs, and determine a target │
│   TCI state switch delay based on the arrival times of the first SSBs │
└─────────────────────────────────────────────────────────┘
                            │
                            ▼                               S3406
┌─────────────────────────────────────────────────────────┐
│ if there is a time offset not less than the duration of CP, determine │
│       the target TCI state switch delay based on an SSB receiving │
│           capability of the terminal and the SSBs sent by the TRPs │
│              corresponding to the target TCI states       │
└─────────────────────────────────────────────────────────┘
                            │
                            ▼                               S3407
┌─────────────────────────────────────────────────────────┐
│  receive a PDCCH message based on the target TCI state switch │
│                          delay                          │
└─────────────────────────────────────────────────────────┘
```

FIG. 3D

```
                                                                    S3501
┌─────────────────────────────────────────────────────────┐
│              receive first information                  │
└─────────────────────────────────────────────────────────┘
                            │
                            ▼                               S3502
┌─────────────────────────────────────────────────────────┐
│  receive an SSB sent by a TRP corresponding to each target TCI │
│                          state                          │
└─────────────────────────────────────────────────────────┘
                            │
                            ▼                               S3503
┌─────────────────────────────────────────────────────────┐
│  determine a target TCI state switch delay based on the SSBs sent │
│         by the TRPs corresponding to target TCI states    │
└─────────────────────────────────────────────────────────┘
```

FIG. 3E

S4101

send first information

S4102

send an SSB by a TRP corresponding to each target TCI state

S4103

determine a target TCI state switch delay based on SSBs sent by TRPs corresponding to target TCI states

S4104

send a PDCCH message based on the target TCI state switch delay

FIG. 4A

S4201

send first information

S4202

send an SSB by a TRP corresponding to each target TCI state

S4203

determine a target TCI state switch delay based on SSBs sent by TRPs corresponding to target TCI states

FIG. 4B

S5101

the terminal processes two SSBs in sequential

S5102

the terminal processes two SSBs in parallel

S5103

a switch delay is determined based on whether a time offset is less than CP

FIG. 5A

terminal

first receiving
module

second receiving
module

time determining
module

FIG. 6A

network device

first sending module

second sending
module

time determining
module

FIG. 6B

710

transceiver 713

processor 711

714

interface

memory 712

FIG. 7A

720

processor 721

722

interface

723

memory

FIG. 7B

## INTERNATIONAL SEARCH REPORT

| | International application No. |
|---|---|
| | **PCT/CN2023/114774** |

### A. CLASSIFICATION OF SUBJECT MATTER

H04L 5/00(2006.01)i

According to International Patent Classification (IPC) or to both national classification and IPC

### B. FIELDS SEARCHED

Minimum documentation searched (classification system followed by classification symbols)

IPC:H04L H04W

Documentation searched other than minimum documentation to the extent that such documents are included in the fields searched

Electronic data base consulted during the international search (name of data base and, where practicable, search terms used)

3GPP, CNTXT, DWPI, ENTXT, CNKI, IEEE: 首, 第一, 起始, 初始, 激活, 活跃, 指示, 状态, 时域, 偏移, 时延, 延时, 重叠, 重合, 冲突, 切换, 两个, 多个, active, SSB, delay, first, max, min, offset, TCI, switch+, overlap+, conflict, TRP, tim+, PDCCH

### C. DOCUMENTS CONSIDERED TO BE RELEVANT

| Category* | Citation of document, with indication, where appropriate, of the relevant passages | Relevant to claim No. |
|---|---|---|
| X | CN 113825229 A (HUAWEI TECHNOLOGIES CO., LTD.) 21 December 2021 (2021-12-21) description, paragraphs 206-593 | 1-27 |
| A | CN 115997459 A (BEIJING XIAOMI MOBILE SOFTWARE CO., LTD.) 21 April 2023 (2023-04-21) entire document | 1-27 |
| A | CN 116250328 A (GUANGDONG OPPO MOBILE TELECOMMUNICATIONS CORP., LTD.) 09 June 2023 (2023-06-09) entire document | 1-27 |
| A | CN 116367312 A (VIVO COMMUNICATION TECHNOLOGY CO., LTD.) 30 June 2023 (2023-06-30) entire document | 1-27 |
| A | WO 2022239074 A1 (NTT DOCOMO, INC.) 17 November 2022 (2022-11-17) entire document | 1-27 |
| A | 3GPP TSG RAN NR. "Base Station (BS) ElectroMagnetic Compatibility (EMC) (Release 15)" *3GPP TS 38.113 V15.4.0*, 31 December 2018 (2018-12-31), entire document | 1-27 |

| ✓ Further documents are listed in the continuation of Box C. | ✓ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **18 April 2024** | **06 May 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | International application No. |
|---|---|
| | **PCT/CN2023/114774** |

**C.    DOCUMENTS CONSIDERED TO BE RELEVANT**

| Category* | Citation of document, with indication, where appropriate, of the relevant passages | Relevant to claim No. |
|---|---|---|
| A | 3GPP TSG RAN NR. "Physical Layer Procedures for Control (Release 16)" *3GPP TS 38.213 V16.7.0*, 30 September 2021 (2021-09-30), entire document | 1-27 |

Form PCT/ISA/210 (second sheet) (July 2022)

**INTERNATIONAL SEARCH REPORT**
Information on patent family members

International application No.

**PCT/CN2023/114774**

| Patent document cited in search report | | | Publication date (day/month/year) | Patent family member(s) | | | Publication date (day/month/year) |
|---|---|---|---|---|---|---|---|
| CN | 113825229 | A | 21 December 2021 | WO | 2021254472 | A1 | 23 December 2021 |
| CN | 115997459 | A | 21 April 2023 | None | | | |
| CN | 116250328 | A | 09 June 2023 | WO | 2022133692 | A1 | 30 June 2022 |
| CN | 116367312 | A | 30 June 2023 | WO | 2023116591 | A1 | 29 June 2023 |
| WO | 2022239074 | A1 | 17 November 2022 | EP | 4340487 | A1 | 20 March 2024 |
| | | | | CN | 117652191 | A | 05 March 2024 |

Form PCT/ISA/210 (patent family annex) (July 2022)